# EUROPEAN PATENT APPLICATION

(11) **EP 4 245 413 A1**
(43) Date of publication of application: **20.09.2023**
(21) Application number: 23161440.5
(22) Date of filing: 13.03.2023
(51) Int. Cl.: B01L 3/00, B65D 75/58

(54) **REAGENT CONTAINER, REAGENT CONTAINER KIT, METHOD OF INSTALLING A REAGENT CONTAINER, FRAME FOR A REAGENT CONTAINER, METHOD OF ASSEMBLING A REAGENT CONTAINER, AND ANALYZER**

(30) Priority: 17.03.2022 JP 2022042985
(71) Applicant: SYSMEX CORPORATION, Kobe-shi Hyogo 651-0073 (JP)
(72) Inventor: Nakanishi, Noriyuki, Kobe-shi, Hyogo, 651-0073 (JP); Nagai, Takaaki, Kobe-shi, Hyogo, 651-0073 (JP); Kuze, Masato, Kobe-shi, Hyogo, 651-0073 (JP); Tanaka, Hironori, Kobe-shi, Hyogo, 651-0073 (JP)
(74) Representative: Hoffmann Eitle

(57) **Abstract**

The reagent container 100 is a reagent container 100 for storing a reagent to be aspirated by an aspiration tube 252 provided in an analyzer 300, and includes a bagshaped reagent storage 10 that stores a reagent and a frame 20 that is configured so that the interior of the reagent storage 10 is sealed when the aspiration tube 252 is inserted from above in conjunction with a predetermined operation on the analyzer 300 and includes an opening 21a attached to the reagent storage 10.

## Description

### TECHNICAL FIELD

The invention relates to a reagent container that contains a reagent used in an analyzer, a reagent container kit, a method of installing a reagent container, a frame for a reagent container, a method of assembling a reagent container, and an analyzer that analyzes a sample using the reagent container.

### BACKGROUND ART

In Patent document 1, a reagent container including a flexible soft bag provided with a tubular lid attachment portion at a top end and a lid member that closes an opening of the lid attachment portion is disclosed. The lid attachment portion of the reagent container is provided with a flange, and the reagent container is suspended from a bracket by engaging the flange with a notch formed in a bracket of an analyzer. A connecting hole is formed in the lid member, and by screwing a connecting member connected to the analyzer into the connecting hole, the liquid inside the reagent container can be supplied to the analyzer through the connecting member while suppressing the inflow of air into the soft bag.

[Patent document 1] Japanese Patent No. 6610377

### SUMMARY

In a method of installing a reagent container of the above-mentioned Patent Document 1, when the reagent container is installed in the analyzer, it is necessary for a human operator to insert the connecting member into the connecting hole of the lid member, which is complicated.

Therefore, it is desired that a reagent container can be easily installed in an analyzer.

This invention is directed toward making it easier to install a reagent container into an analyzer.

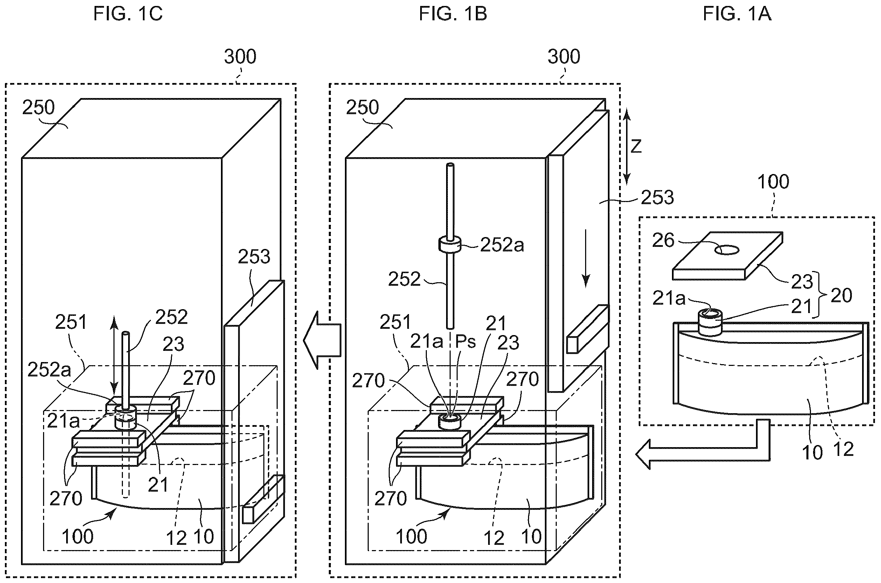

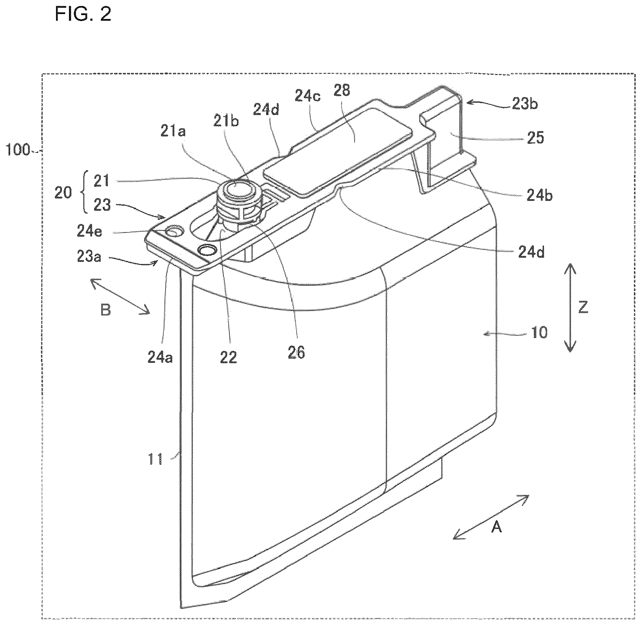

In order to achieve the above-mentioned purpose, a reagent container (100) of the present invention, as illustrated in FIG. 1 and FIG. 2, is a reagent container (100) for storing a reagent that is aspirated by an aspiration tube (252) provided in an analyzer (300), and comprises a bag-shaped reagent storage (10) for storing a reagent and a frame (20) including an opening (21a) attached to the bag-shaped reagent storage (10), wherein the reagent container (100) is configured that an interior of the bag-shaped reagent storage (10) is sealed at the time in which the aspiration tube (252) is inserted from above in conjunction with a predetermined operation on the analyzer (300).

The reagent container (100) of the invention, as illustrated in FIG. 1 and FIG. 2, is configured that an interior of the bag-shaped reagent storage (10) is sealed at the time in which the aspiration tube (252) is inserted from above in conjunction with a predetermined operation on the analyzer (300) and includes the frame (20) including the opening (21A) attached to the bag-shaped reagent storage (10). As a result, a user does not need to insert the aspiration tube (252) into the opening (21a) of the reagent container (100) prior to installation of the reagent container (100) so that the reagent container (100) can be easily installed in the analyzer (300). Also, since the interior of the bag-shaped reagent storage (10) is sealed at the time in which the aspiration tube (252) is inserted, the reagent in the bag-shaped reagent storage (10) is prevented from contacting the outside air. Therefore, deterioration of the reagent after installation in the analyzer (300) can be suppressed.

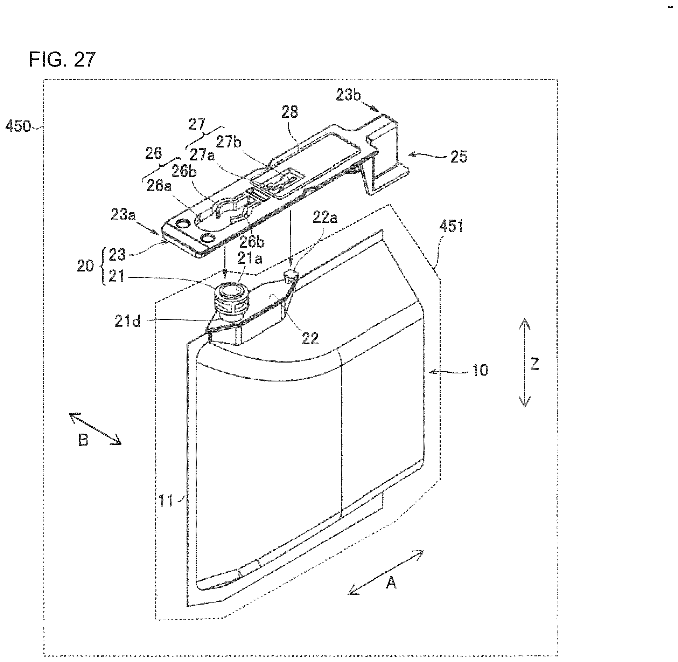

As illustrated in FIG. 27, a reagent container kit (450) of the present invention is a reagent container kit (450) to assemble the reagent container (100) for storing a reagent that is aspirated by the aspiration tube (252) installed in the analyzer (300), and comprises the bag-shaped bag-shaped reagent storage (10) for storing the reagent, and the frame (20) including the opening (21a) and attachable to the bag-shaped reagent storage (10), wherein the reagent container kit (450) is configured so that the frame (20) is attached to the bag-shaped reagent storage (10) and the interior of the bag-shaped reagent storage (10) is sealed at the time in which the aspiration tube (252) is inserted from above in conjunction with a predetermined operation on the analyzer (300).

As illustrated in FIG.27, the reagent container kit (450) is configured so that the frame (20) is attached to the bag-shaped reagent storage (10) and the interior of the bag-shaped reagent storage (10) is sealed at the time in which the aspiration tube (252) is inserted from above in conjunction with a predetermined operation on the analyzer (300). As a result, the user does not need to insert the aspiration tube (252) into the opening (21a) of the reagent container (100) prior to installation of the reagent container (100) so that the reagent container (100) can be easily installed in the analyzer (300). Also, since the interior of the bag-shaped reagent storage (10) is sealed at the time in which the aspiration tube (252) is inserted, the reagent in the bag-shaped reagent storage (10) is prevented from contacting the outside air. Therefore, deterioration of the reagent after installation in the analyzer (300) can be suppressed.

As illustrated in FIG. 1, a method of installing a reagent container of the present invention is a method of installing the reagent container (100) to the analyzer (300) including the aspiration tube (252), including: moving the reagent container (100) comprising the bag-shaped reagent storage (10) that stores a reagent that is aspirated by the aspiration tube (252) and the frame (20) including the opening (21a) into the analyzer (300); positioning the opening (21a) below the aspiration tube (252) by contacting the frame (20) with a part of the analyzer (300) in the analyzer (300) by moving the aspiration tube (252) downward with the frame (20) in contact with the part of the analyzer (30) (see FIG. 1B); and inserting the aspiration tube (252) into the opening (21a) from above the reagent container (100) and sealing the interior of the bag-shaped reagent storage (10) at the time in which the aspiration tube (252) is inserted to the opening (21a) (see FIG. 1C).

As illustrated in FIG. 1, in the method of installing the reagent container (100), the aspiration tube (252) can be inserted into the opening (21a) by moving the reagent container (100) into the analyzer (300) until the frame (20) is in contact with the analyzer (300) and moving the aspiration tube (252) downward. Therefore, the user does not need to insert the aspiration tube (252) into the opening (21a) of the reagent container (100) prior to installation of the reagent container (100) so that the reagent container (100) can be easily installed in the analyzer (300). Also, since the interior of the bag-shaped reagent storage (10) is sealed at the time in which the aspiration tube (252) is inserted, the reagent in the bag-shaped reagent storage (10) is prevented from contacting the outside air. Therefore, deterioration of the reagent after installation in the analyzer (300) can be suppressed.

As illustrated in FIG. 1 and FIG. 2, the reagent container (100) of the present invention is the reagent container (100) for storing a reagent that is aspirated by the aspiration tube (252) provided in the analyzer (300), including the reagent storage (10) for storing a reagent and the frame (20) that includes the opening (21a) and is arranged in the reagent storage (10), wherein the frame (20) is configured so that the opening (21a) is sealed by a seal (252a) that moves with the aspiration tube (252) at the time in which the aspiration tube (252) is inserted from above in conjunction with a predetermined operation on the analyzer (300).

As illustrated in FIG. 1 and FIG. 2, in the reagent container (100) of the present invention, the frame (20) is configured so that the opening (21a) is sealed by the seal (252a) that moves with the aspiration tube (252) at the time in which the aspiration tube (252) is inserted from above in conjunction with a predetermined operation on the analyzer (300). Therefore, the user does not need to insert the aspiration tube (252) into the opening (21a) of the reagent container (100) prior to installation of the reagent container (100) so that the reagent container (100) can be easily installed in the analyzer (300). Also, since the opening (21a) is sealed by the seal (252a) that moves with the aspiration tube (252), the reagent in the reagent storage (10) is prevented from contacting the outside air. Therefore, deterioration of the reagent after installation in the analyzer (300) can be suppressed.

As illustrated in FIG. 1 and FIG. 2, the reagent container (100) of the present invention is the reagent container (100) for storing a reagent that is aspirated by the aspiration tube (252) that is arranged to be movable in vertical direction in the analyzer (300) including, the reagent storage (10) for storing the reagent, the mounting member (22) that is arranged in the reagent storage (10) and includes the opening (21a), and the movement control member (23) that is attached to the mounting member (22), wherein the movement control member (23) is configured to support the reagent storage (10) via the mounting member (22) while positioning the opening (21a) below the aspiration tube (252) by contacting a part of the analyzer (300).

As illustrated in FIG. 1 and FIG. 2, in the reagent container (100) of the present invention, the movement control member (23) is in contact with a part of the analyzer (300) to provide the opening (21a) below the aspiration tube (252) and to support the reagent storage (10) via the mounting member (22). Thereby, in case that the reagent container (100) is installed in the analyzer (300), the aspiration tube 252 can be inserted into the opening (21a) simply by bringing the movement control member (23) into contact with a part of the analyzer (300) and moving the aspiration tube (252) downward. Therefore, the user does not need to insert the aspiration tube (252) into the opening (21a) of the reagent container (100) prior to installation of the reagent container (100) so that the reagent container (100) can be easily installed in the analyzer (300).

As illustrated in FIG. 1 and FIG. 2, the frame (20) of the present invention is the frame (20) attached to the bag-shaped reagent container (100) for storing a reagent that is aspirated by the aspiration tube (252) arranged in the analyzer (300) including, the movement control member (23) that includes connectors (26, 27) that connect to the reagent container (100) provided with the opening (21a), wherein the movement control member (23) controls the movement of the opening (21a), by contacting with a part of the analyzer, so that the interior of the reagent container (100) is sealed in case that the aspiration tube (252) is inserted into the reagent container (100) from above in conjunction with a predetermined operation on the analyzer (300).

As illustrated in FIG. 1 and FIG. 2, in the frame (20) of the reagent container of the invention, the movement control member (23) is in contact with a part of the analyzer (300) to regulate the movement of the opening (21a) so that the interior of the reagent container (100) is sealed at the time in which the aspiration tube (252) is inserted into the reagent container (100) from above in conjunction with a predetermined operation on the analyzer (300). Therefore, the user does not need to perform an operation to insert the aspiration tube (252) into the opening (21a) of the reagent container (100) prior to installation of the reagent container (100) so that the reagent container (100) can be easily installed in the analyzer (300). Also, since the interior of the reagent storage (10) is sealed at the time in which the aspiration tube (252) is inserted, the reagent in the reagent storage (10) is prevented from contacting the outside air. Therefore, deterioration of the reagent after installation in the analyzer (300) can be suppressed.

As illustrated in FIG. 1, FIG. 2 and FIG. 27, the reagent container (100) of the present invention is the reagent container (100) for storing a reagent that is aspirated by the aspiration tube (252) provided in the analyzer (300) including, a container body (451) including the bag-shaped reagent storage (10) for storing the reagent, and the mounting member (22) including the opening (21a) and is arranged in the bag-shaped reagent storage (10), wherein the mounting member (22) includes mounting portions (21, 22a), to which the frame (20) is attached that restricts movement of the opening (21a) so that the interior of the bag-shaped reagent storage (10) is sealed in case that the aspiration tube (252) is inserted from above in conjunction with a predetermined operation on the analyzer (300).

As illustrated in FIG. 1, FIG. 2 and FIG. 27, in the reagent container (100) of the invention, the mounting member (22) comprises mounting portions (21, 22a) that attach the frame (20), which regulates the movement of the opening (21a) so that the interior of the bag-shaped reagent storage (10) is sealed at the time in which the aspiration tube (252) is inserted from above in conjunction with a predetermined operation on the analyzer (300). Thereby, by attaching the frame (20) to the mounting member (22) and installing the reagent container (100) into the analyzer (300), the aspiration tube (252) can be inserted in conjunction with a predetermined operation on the analyzer (300). Therefore, the user does not need to perform an operation to insert the aspiration tube (252) into the opening (21a) of the reagent container (100) prior to installation of the reagent container (100) so that the reagent container (100) can be easily installed in the analyzer (300). Also, since the interior of the bag-shaped reagent storage (10) is sealed at the time in which the aspiration tube (252) is inserted, the reagent in the bag-shaped reagent storage (10) is prevented from contacting the outside air. Therefore, deterioration of the reagent after installation in the analyzer (300) can be suppressed.

As illustrated in FIG. 1, FIG. 2 and FIG. 27, a method of assembling a reagent container of the present invention is a method of assembling the reagent container (100) for storing a reagent that is aspirated by the aspiration tube (252) installed in the analyzer (300) including, positioning the movement control member (23) on the mounting member (22) of the reagent container (100) comprising: the container body (451) that includes the bag-shaped reagent storage (10) for storing a reagent, and the mounting member (22), which includes the opening (21a) and is provided in the bag-shaped reagent storage (10); and the movement control member (23) controls the movement of the opening (21a), by contacting a part of the analyzer (300), so that the interior of the bag-shaped reagent storage (10) is sealed in case that the aspiration tube (252) is inserted into the bag-shaped reagent storage (10) is sealed from above in conjunction with a predetermined operation on the analyzer(300), and connecting the mounting member (22) and the movement control member (23) to each other by moving the movement control member (23) relative to the mounting member (22).

As illustrated in FIG. 1, FIG. 2 and FIG. 27, in the method of assembling a reagent container of the present invention, by connecting the mounting member (22) and the movement control member (23) to each other, the reagent container (100) is assembled with the container body (451) and the movement control member (23). The movement of the opening (21a) is regulated so that the interior of the bag-shaped reagent storage (10) is sealed at the time in which the aspiration tube (252) is inserted into the bag-shaped reagent storage (10) from above in conjunction with a predetermined operation on the analyzer (300) in case that the reagent container (100) is installed in the analyzer (300) and the movement control member (23) is in contact with a part of the analyzer (300). Therefore, the user does not need to perform an operation to insert the aspiration tube (252) into the opening (21a) of the reagent container (100) prior to installation of the reagent container (100) so that the reagent container (100) can be easily installed in the analyzer (300). Also, since the interior of the bag-shaped reagent storage (10) is sealed at the time in which the aspiration tube (252) is inserted, the reagent in the bag-shaped reagent storage (10) is prevented from contacting the outside air. Therefore, deterioration of the reagent after installation in the analyzer (300) can be suppressed.

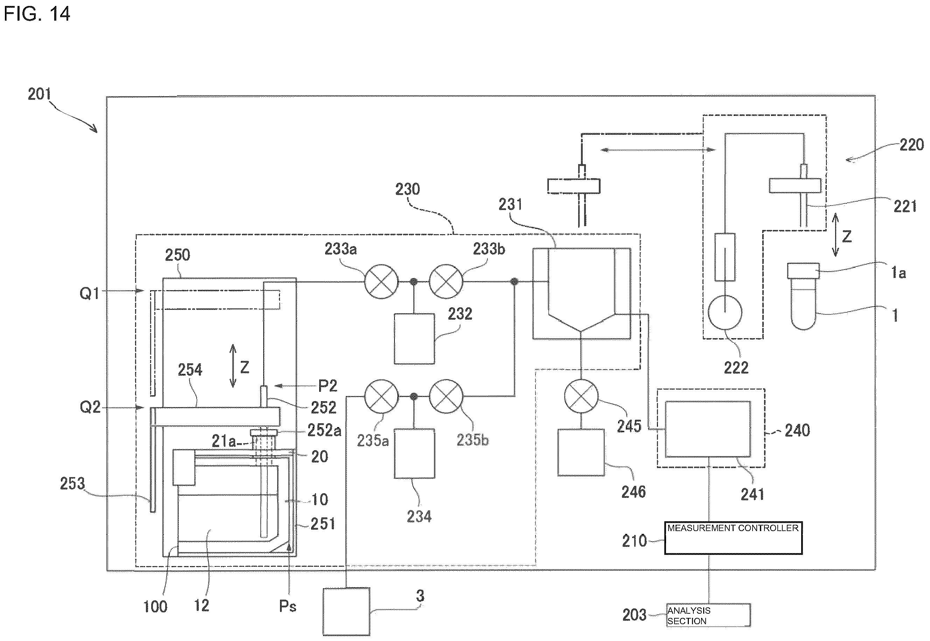

As illustrated in FIG. 14, the analyzer (300) of the present invention comprising: a sample aspirator (220) to aspirate a sample; a specimen preparing unit (230) that includes a reagent aspirator (250), which aspirates a reagent from the reagent container (100), and mixes a sample and a reagent to prepare a measurement specimen; a detector (240) that detects a component in a measurement specimen; and an analyzing device (203) that analyzes a detection signal from the detector (240), wherein the reagent aspirator (250) including: a container holder (251) for holding the reagent container (100), which includes the reagent storage (10) for storing a reagent and the frame (20) including the opening (21a); the aspiration tube (252) that is inserted to the opening (21a) from above the reagent storage (10) held by the container holder (251) and seals the interior of the reagent storage (10) at the time in which the aspiration tube (252) is inserted to the opening (21a); an operator (253) that receives a predetermined operation to move the aspiration tube (252); and a movement mechanism (254) that moves the aspiration tube (252) into the reagent container (100) held by the container holder (251) and moves the aspiration tube (252) out of the reagent container (100) by moving the reagent container (100) and the aspiration tube (252) relative to each other in conjunction with a predetermined operation.

As illustrated in FIG. 14, in the analyzer (300) of the present invention, the user does not need to perform an operation to insert the aspiration tube (252) into the opening (21a) of the reagent container (100) prior to installation of the reagent container (100) so that the reagent container (100) can be easily installed in the analyzer (300). Also, since the interior of the reagent storage (10) is sealed at the time in which the aspiration tube (252) is inserted, the reagent in the reagent storage (10) is prevented from contacting the outside air by the sealing. Therefore, deterioration of the reagent after installation in the analyzer (300) can be suppressed.

According to the present invention, a reagent container can be easily installed in an analyzer.

### BRIEF DESCRIPTION OF DRAWINGS

FIG. 1A is a schematic diagram illustrating a configuration of a reagent container, a schematic diagram , FIG. 1B is a schematic diagram illustrating an aspiration tube before insertion into a reagent container installed in an analyzer, and FIG. 1C is a schematic diagram illustrating the aspiration tube after insertion;
FIG. 2 is a perspective view illustrating an example of the reagent container;
FIG. 3 is an exploded perspective view illustrating the reagent container of FIG. 2;
FIG. 4 is a perspective view illustrating a mounting member from a bottom side;
FIG. 5 is a schematic cross-sectional view illustrating the reagent container;
FIG. 6 is a top view illustrating the reagent container;
FIG. 7 is a diagram illustrating a movement control member viewing from one end along a first direction;
FIG. 8 is an enlarged perspective view illustrating the reagent container to illustrate a fixing part and a holder;
FIG. 9 is a perspective view illustrating a small volume reagent container;
FIG. 10A is a diagram illustrating a large volume reagent container, FIG. 10B is a diagram illustrating a small volume reagent container, viewing along the first direction;
FIG. 11A is a diagram illustrating the large volume reagent container, and FIG. 11B is a diagram illustrating the small volume reagent container, viewing along a second direction;
FIG. 12 is a perspective view illustrating an example of an analyzer.
FIG. 13 is a schematic plan view illustrating the analyzer of FIG. 12;
FIG. 14 is a schematic diagram illustrating a sample aspirator, a reagent preparing section, and a detection section;
FIG. 15 is a perspective view illustrating a reagent aspirator;
FIG. 16 is a perspective view illustrating a structure of a storage;
FIG. 17 is a diagram illustrating a state in which a reagent container is stored in the storage;
FIG. 18 is a diagram illustrating a second insertion part;
FIG. 19 is a diagram illustrating a state in which the movement control member is inserted into the second insertion part;
FIG. 20 is a schematic cross-sectional view illustrating the state in which the movement control member is inserted into the second insertion part viewing from above;
FIG. 21A is a diagram illustrating a state before a protruding member engages with a notch in the movement control member, and FIG. 21B is a diagram illustrating a state in which the protruding member engages with the notch in the movement control member;
FIG. 22 is a schematic longitudinal sectional view illustrating a reagent container holder when an aspiration tube is in a raised position;
FIG. 23 is a diagram illustrating a state in which the reagent container is installed in the reagent container holder of FIG. 22;
FIG. 24 is a diagram illustrating a state in which the aspiration tube is moved to a downward position from FIG. 23;
FIG. 25 is a schematic cross-sectional view illustrating the reagent container with the aspiration tube inserted viewing from above;
FIG. 26A is an enlarged cross-sectional view illustrating an opening that illustrates a state before the opening is sealed, and FIG. 26B is a diagram illustrating a state in which the opening is sealed;
FIG. 27 is a diagram illustrating a perspective view illustrating an example of a reagent container kit;
FIGS. 28A, 28B, 28C, and 28D are perspective views illustrating variations of the reagent container;
FIG. 29 is a schematic diagram illustrating another variation of the reagent container;
FIG. 30A is a diagram illustrating a variation of the reagent container that shows a state in which the reagent storage is separated from the movement control member and FIG. 30B is a diagram illustrating a variation of the reagent container that shows a state in which the reagent storage is stored in the movement control member;
FIG. 31 is a schematic diagram illustrating a first variation of a seal of the aspiration tube;
FIG. 32 is a schematic diagram illustrating a second variation of the seal of the aspiration tube;
FIG. 33A is a schematic diagram illustrating an example of a sealing part of an opening in the reagent container and FIG. 33B is a perspective view of the seal;
FIG. 34 is a diagram illustrating a variation of a contacting part;
FIG. 35 is a diagram illustrating a state in which the reagent container is placed in a set position in FIG. 34;
FIG. 36A is a diagram illustrating a state in which an engagement pin of a switching mechanism is in a second part of a guide groove and FIG. 36B is a diagram illustrating a state in which the engagement pin of the switching mechanism is in a first part of the guide groove;
FIG. 37A is a diagram illustrating a state before the aspiration tube is inserted into the opening, FIG. 37B is a diagram illustrating a state in which a sealing switching mechanism seals the opening, and FIG. 37C is a diagram illustrating a state in which the sealing switching mechanism unseals the opening;
FIG. 38A is a diagram illustrating a variation of the analyzer with a carrying member that illustrates a state before the aspiration tube is inserted into the opening and FIG. 38B is a diagram illustrating a state in which the aspiration tube is inserted into the opening; and
FIG. 39A is a diagram illustrating a variation of the analyzer with a driving section that illustrates a state before the aspiration tube is inserted into the opening and FIG. 39B is a diagram illustrating a state in which the aspiration tube is inserted into the opening.

### DETAILED DESCRIPTION

The following explanation is based on the drawings.

### [Reagent container]

First, with reference to FIG. 1, an overview of a reagent container 100 according to an embodiment is described.

The reagent container 100 is a container that stores a reagent 12, which is used for an analysis of a sample by an analyzer 300, inside. As illustrated in FIG. 1A, the reagent container 100 includes a reagent storage 10 and a frame 20.

In the reagent storage 10, the reagent 12 is stored inside the reagent storage 10 that is a container capable of storing liquid. In an example of FIG. 1, the reagent storage 10 is a bag-shaped member. The reagent storage 10 is flexible and deformable. The reagent storage 10 may be a rigid container that is not deformable.

The frame 20 is a member that is attached to the reagent storage 10. The frame 20 includes an opening 21a that connects the interior of the reagent storage 10 to the exterior of the reagent storage 10.

In an example of FIG. 1, the frame 20 includes an opening portion 21 that is attached to an upper part of the reagent storage 10 and a movement control member 23 that is secured to the opening portion 21. An opening 21a is a through hole that is formed in the opening portion 21. The opening 21a has a circular shape. The opening 21a is provided at the upper part of the reagent storage 10. The opening 21a is located at one end of a longitudinal direction of the reagent storage 10 in a horizontal direction. The movement control member 23 has a rectangular flat plate shape. The movement control member 23 is attached to the opening portion 21 at a fixing portion 26. The fixing portion 26 is a through hole corresponding to an external shape of the opening portion 21. The fixing portion 26 is provided in the center of the movement control member 23 and penetrates in a thickness direction of the movement control member 23. By inserting the opening portion 21 into the inside of the fixing portion 26, the movement control member 23 is fixed to the opening portion 21. FIG. 1A illustrates a state in which the movement control member 23 is separated from the opening portion 21. The frame 20 is formed of a harder material than the reagent storage 10. The opening portion 21 and the movement control member 23 that configure the frame 20 have the rigidity necessary to maintain their shapes in the normal state of use of the reagent container 100.

As illustrated in FIG. 1B, the reagent container 100 is installed in the analyzer 300. The reagent container 100 is installed by a user in a predetermined installation position inside the analyzer 300 and is held by the analyzer 300. The reagent container 100 is inserted horizontally into the analyzer 300 with the longitudinal one end side, where the opening 21a is located, at the top. The reagent container 100 is placed at a set position Ps where the central axis line of the opening 21a of the frame 20 and the central axis line of an aspiration tube 252 are aligned, with the opening 21a facing upward, and is positioned at the set position Ps.

The analyzer 300 includes a container holder 251 to hold the reagent container 100 and the aspiration tube 252 to aspirate a reagent in the reagent container 100 held in the container holder 251. The aspiration tube 252 is provided directly above the container holder 251 and is movable in a vertical direction. The reagent container 100 is held at the set position Ps in the container holder 251. The container holder 251 is a space to store the reagent container 100.

The movement control member 23 is configured to control the movement of the opening 21a by contacting a part of the analyzer 300 when the reagent container 100 is inserted into the container holder 251. In other words, the analyzer 300 includes a contacting part 270 that regulates movement of the opening 21a by contacting the movement control member 23. The contacting part 270 includes an inner surface of the container holder 251. When the reagent container 100 is inserted into the container holder 251, an end surface of the movement control member 23 that is located on the leading side in the insertion direction contacts the contacting part 270, which is an inner surface of the container holder 251, thereby the position of the opening 21a in the insertion direction is determined to be the set position Ps.

In addition, the contacting part 270 is provided at both ends in the width direction of the movement control member 23, and on both upper and lower sides of the movement control member 23. When the reagent container 100 is placed in the container holder 251, the movement control member 23 is inserted between the contacting parts 270, which are provided vertically on each side of the width direction. Thereby, the contacting parts 270 are in vertical contact with the movement control member 23 to restrict the vertical movement of the opening 21a. The contacting part 270 is in contact with the movement control member 23 to secure the movement control member 23 so that the opening 21a does not move from the set position Ps.

The analyzer 300 includes an operator 253 that receives a predetermined operation for moving the aspiration tube 252 from a user of the analyzer 300. As illustrated in FIG. 1C, the aspiration tube 252 is inserted into the reagent container 100 from above in conjunction with the predetermined operation on the analyzer 300.

Here, the frame 20 is configured so that the interior of the reagent storage 10 is sealed when the aspiration tube 252 is inserted from above in conjunction with the predetermined operation on the analyzer 300. In the example of FIG. 1C, the opening 21a of the frame 20 is sealed by a seal 252a provided on the aspiration tube 252 with the aspiration tube 252 inserted in the opening 21a. With the interior of the reagent storage 10 sealed, the reagent 12 in the reagent storage 10 is aspirated by the aspiration tube 252.

Thus, the reagent container 100 is a reagent container that stores the reagent 12 to be aspirated by the aspiration tube 252 provided in the analyzer 300. The reagent container 100 stores the reagent 12 that is repeatedly aspirated with the aspiration tube 252 inserted. Once the aspiration tube 252 is inserted into the opening 21a of the unused reagent container 100 and the interior of the reagent storage 10 is sealed, the aspiration tube 252 can then remain inserted until all of the reagent 12 in the reagent storage 10 is consumed. In the meantime, the interior of the reagent storage 10 remains sealed by the seal 252a.

As described above, the reagent container 100 of the embodiment is configured so that the interior of the reagent storage 10 is sealed when the aspiration tube 252 is inserted from above in conjunction with the predetermined operation on the analyzer 300, and includes the frame 20 that includes the opening 21a attached to the reagent storage 10. Thereby, the user does not need to perform an operation to insert the aspiration tube 252 into the opening 21a of the reagent container 100 prior to installation of the reagent container 100 so that the reagent container 100 can be easily installed in the analyzer 300. Also, since the interior of the reagent storage 10 is sealed when the aspiration tube 252 is inserted, the reagent 12 in the reagent storage 10 is prevented from contacting the outside air. Therefore, deterioration of the reagent 12 after installation in the analyzer 300 can be suppressed.

Thus, the reagent container 100 of the embodiment is configured to suppress quality deterioration of the reagent 12 after installation in the analyzer 300 and to enable continued use of the reagent 12 for a longer period of time while still attached to the analyzer 300. One of the main methods of suppressing quality deterioration is to prevent contact between the reagent 12 and air.

Here, in the case of a rigid reagent container that does not deform, when a reagent is aspirated in a sealed state, the internal pressure of the reagent container decreases as the reagent decreases, reaching equilibrium with the aspiration pressure and preventing the reagent from being aspirated, so the inside of the container needs to be kept open to the atmosphere. A reagent in the reagent container deteriorates due to contact with air. In contrast, the present embodiment includes the reagent storage 10 that is deformable and bag-shaped, so that a drop in internal pressure can be avoided by the reagent storage 10 contracting and deforming by itself, and as a result, the reagent 12 can be aspirated even in a sealed state. Therefore, the reagent container 100 is configured so that the interior of the reagent storage 10 is sealed by restricting the inflow of air into the opening 21a. The restriction of the inflow of air into the opening 21a can prevent deterioration of the reagent 12 inside the reagent storage 10 due to contact with air.

Since the deterioration of the reagent 12 can be suppressed, the reagent in the reagent container 100 can continue to be used for a longer period of time with the reagent container 100 installed in the analyzer 300. Therefore, by increasing the capacity of the reagent storage 10 and enabling a greater number of reagent aspirations from a single reagent container 100, the frequency of replacing the reagent container 100 in the operation of the analyzer 300 can be reduced. For the user, this is desirable because the number of times the reagent container 100 is replaced in a certain period of time can be reduced.

On the other hand, when the bag-shaped reagent storage 10, which is easily deformed, is used, a position of the opening 21a when inserting the aspiration tube 252 into the reagent storage 10 and a position of the opening 21a with the aspiration tube 252 inserted can easily be changed by external force. In particular, in the embodiment, instead of the user manually inserting the aspiration tube 252, an operation of the analyzer 300 causes the aspiration tube 252 inserting into the opening 21a; therefore, positioning of the opening 21a and prevention of misalignment of the opening 21a are important for sealing the reagent storage 10.

Therefore, the reagent container 100 of the embodiment includes a frame structure to ensure the positioning of the opening 21a and the prevention of misalignment of the opening 21a when the reagent container 100 is installed in the analyzer 330. In other words, the movement control member 23 of the frame 20 is in contact with a part of the analyzer 300 (a contacting part 270 described below) to securely position the reagent container 100 at the set position Ps of the container holder 251. As a result, the relative position of the opening 21a and the seal 252a is precisely determined, and the opening 21a can be securely sealed.

In addition, in the set position Ps, the movement control member 23 fixed to the opening portion 21 is held not to move by contacting a part of the analyzer 300. As a result, the movement of the opening 21a is regulated so that the opening 21a to be sealed by the seal 252a does not displace. Thereby, while the aspiration tube 252 is inserted into the reagent storage 10, the sealing of the reagent storage 10 by the seal 252a is suppressed from being released due to unintended misalignment of the opening 21a.

The frame 20 is configured to keep the interior of the reagent storage 10 sealed while the reagent 12 is repeatedly aspirated by the aspiration tube 252. Therefore, the reagent in the reagent container 100 can continue to be used for a longer period of time without the reagent 12 deteriorating due to contact with air, with the reagent container 100 installed in the analyzer 300.

### [A method of installing a reagent container]

A method of installing a reagent container of the embodiment is described. First, the reagent container 100 that includes the reagent storage 10, which stores a reagent to be aspirated by the aspiration tube 252, and the frame 20, which includes the opening 21a, is moved into the analyzer 300 as illustrated in FIG. 1B.

By bringing the frame 20 into contact with a part of the analyzer 300 in the analyzer 300, the opening 21a is positioned directly below the aspiration tube 252. In other words, when the reagent container 100 is moved to the set position Ps in the analyzer 300, the movement control member 23 is in contact with a part of the analyzer 300, and the opening 21a is determined to position directly below the aspiration tube 252.

As illustrated in FIG. 1C, by moving the aspiration tube 252 downward with the frame 20 in contact with a part of the analyzer 300, the aspiration tube 252 is inserted into the opening 21a from above the reagent container 100, and the interior of the reagent storage 10 is sealed when the aspiration tube 252 is inserted into the opening 21a. Specifically, the aspiration tube 252 moves downward in conjunction with a predetermined operation on the analyzer 300. As a result, the aspiration tube 252 is inserted into the opening 21a. When the aspiration tube 252 is inserted into the opening 21a, the opening 21a is sealed by the seal 252a of the aspiration tube 252 and the interior of the reagent storage 10 is sealed.

In the method of installing the reagent container of the embodiment, the aspiration tube 252 can be inserted into the opening 21a by moving the reagent container 100 into the analyzer 300 until the frame 20 is in contact with the analyzer 300 and moving the aspiration tube 252 downward. Therefore, the user does not need to perform an operation to insert the aspiration tube 252 into the opening 21a of the reagent container 100 prior to installation of the reagent container 100 so that the reagent container 100 can be easily installed in the analyzer 300. Also, since the interior of the reagent storage 10 is sealed when the aspiration tube 252 is inserted, the reagent in the reagent storage 10 is prevented from contacting the outside air. Therefore, deterioration of the reagent after installation in the analyzer 300 can be suppressed.

### (Detailed configuration of a reagent container)

In the following, with reference to FIG. 2 to FIG. 12, a configuration of the reagent container 100 of other embodiments is described in detail. Also, in the following, as illustrated in FIG. 2, of a horizontal direction, a longitudinal direction of the reagent container 100 is designated as a first direction A, and a short direction of the reagent container 100 is designated as a second direction B. A vertical direction is referred to as a Z direction.

### (Reagent storage)

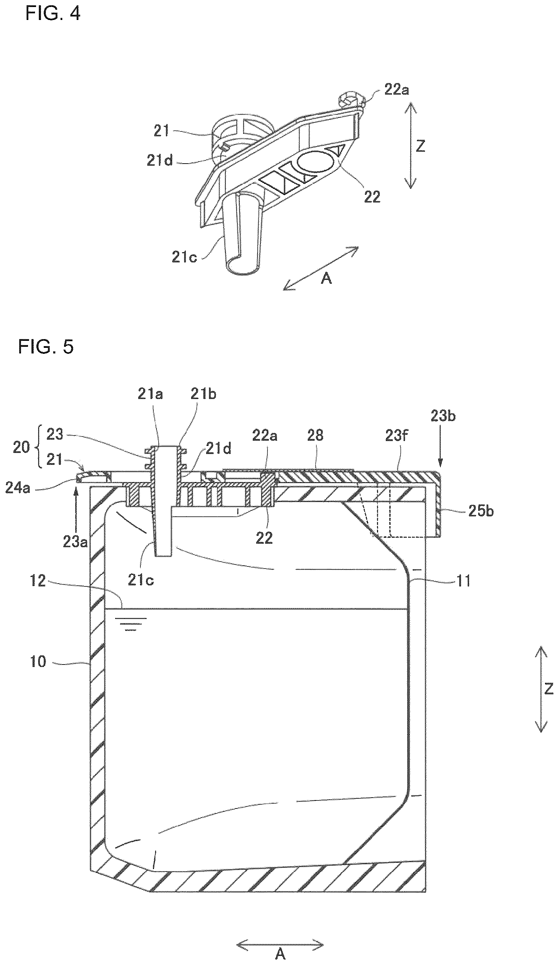

The reagent storage 10 stores the reagent 12 (see FIG. 5). As illustrated in FIG. 2, the reagent storage 10 is a bag-shaped member.

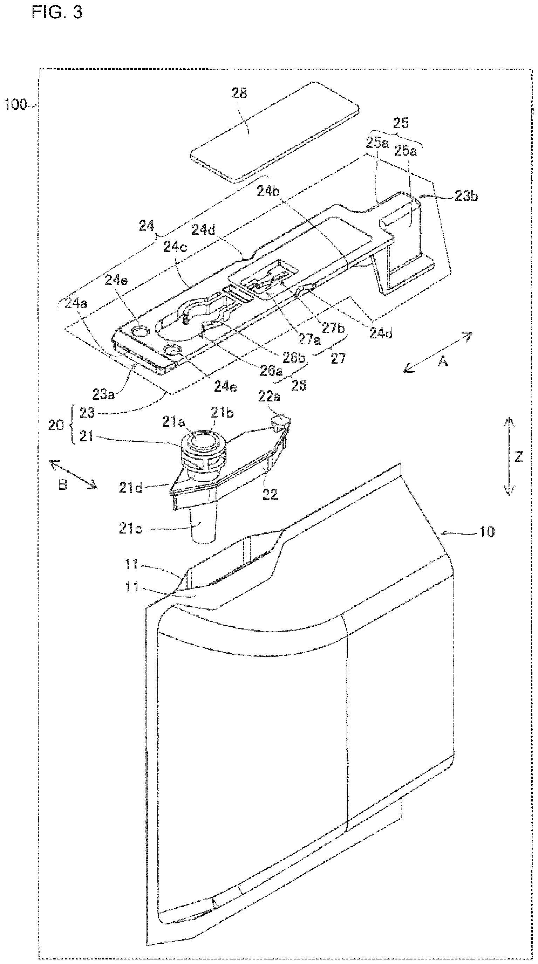

The reagent storage 10 is formed in bag-shaped using a film-like material. As illustrated in FIG. 3, the reagent storage 10 is formed into a hollow bag-like shape by overlapping a plurality of sheet-like materials and joining the outer edges of the overlapped film materials to each other.

The reagent storage 10 is made of a laminated structural film material 11 that includes gas barrier property and light shielding property. The gas barrier property is a property that makes it difficult for gas to permeate. In the specification, the gas barrier property refers to resistance to permeation of air, particularly oxygen. The light barrier property is a property that does not allow light to penetrate. This prevents the reagent 12 stored in the reagent container 100 from being degraded by external air and the reagent 12 stored in the reagent container 100 from being degraded by external light, e.g., sunlight, etc. As a result, the degradation of the reagent can be effectively suppressed over a long period of time.

The laminated structural film material 11 includes at least one base material layer and at least one gas barrier layer. The laminated structural film material 11 may further include a protective layer that protects an outer surface of the gas barrier layer. The laminated structural film material 11 may include a light shielding layer comprising a light shielding material. When a material having both gas barrier property and light shielding property is used for the gas barrier layer, the gas barrier layer and the light shielding layer may be the same layer. The number of layers of the laminated structural film material is 2 or more, but may be 3 to 9 or 10 or more, and is not particularly limited.

The laminated structural film material 11 used in the reagent storage 10, for example, the following composition is mentioned. (Outside of a bag) / nylon (15 µm) / aluminum foil (9 µm) / polyethylene (9 µm) / (inside of the bag). In this configuration, in the reagent storage 10, nylon functions as a protective layer, aluminum foil functions as the gas barrier layer and light shielding layer, and polyethylene is the base material layer. In the reagent storage 10, the base material layers, which are made of polyethylene, are joined by heat welding. The laminated structural film material 11 in the configuration is a metal foil laminated film having a structure in which a gas barrier layer comprising a metal foil is laminated to a resin base material layer.

In addition, for the laminated structural film material 11, for example, a resin-based multilayer barrier film, a coating-based film, a vapor-deposited film, an organic-inorganic composite film, etc. can be used. The resin-based multilayer barrier film is a film having a structure in which gas barrier layers of resin materials are laminated. The resin material with excellent gas barrier property includes, for example, PVDC (polyvinylidene chloride), PVA (polyvinyl alcohol), EVOH (ethylene-vinyl alcohol copolymer), etc. The coating-based film is a film having a structure in which a gas barrier material is coated (film-formed) on a base material layer. The gas barrier material used in the film formation includes PVDC, PVA, EVOH, etc. The vapor-deposited film is a film having a structure in which a gas barrier material is evaporated onto the base material layer. The gas barrier material vapor deposited includes a metal, such as aluminum and steel, or an inorganic oxide, such as alumina and silica. The organic-inorganic composite film includes a laminated film with a structure in which a gas barrier layer of an organic material (resin material) and a gas barrier layer of an inorganic material are separately laminated, and a film with a gas barrier layer in which an inorganic material is dispersed in an organic binder.

### (Frame)

As illustrated in FIG. 2, the frame 20 includes the opening portion 21 including the opening 21a and the movement control member 23 that is configured to contact a part of the analyzer 300 and to restrict movement of the opening 21a.

By the movement control member 23 contacting with a part of the analyzer 300, the opening 21a can be restricted to move. As a result, misalignment between the aspiration tube 252 and the opening 21a can be suppressed when the aspiration tube 252 is inserted. In addition, since misalignment between the aspiration tube 252 and the opening 21a can be suppressed with the aspiration tube 252 being inserted into the interior of the reagent storage 10 from the opening 21a, a sealed state of the interior of the reagent storage 10 can be effectively maintained.

### <Opening portion 21>

The opening portion 21 is a cylindrical section in which the opening 21a is formed. The lower end of the opening 21a leads to the interior of the reagent storage 10, and the upper end leads to the exterior of the reagent storage 10. The opening portion 21 is provided at the upper part of the reagent storage 10.

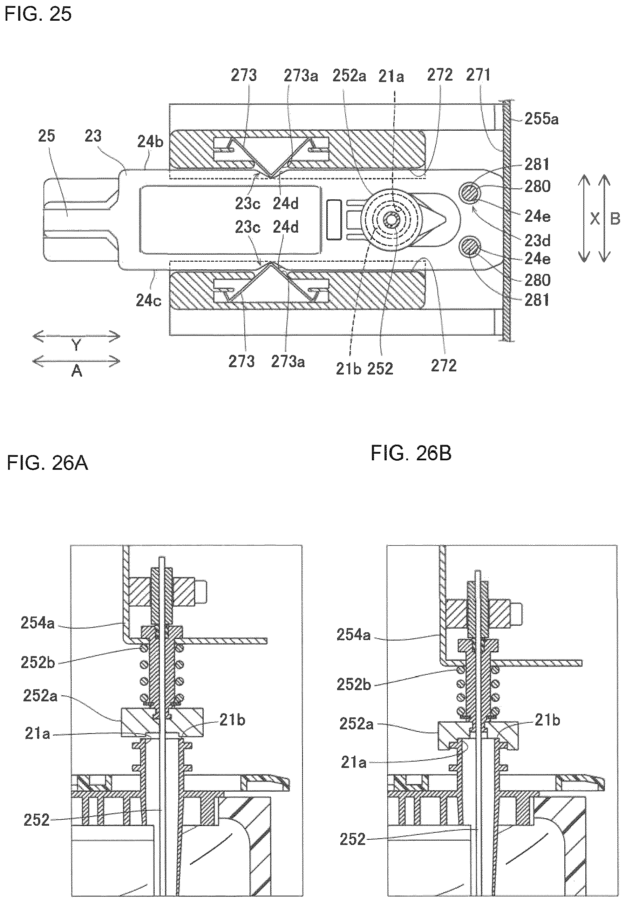

The opening portion 21 includes a sealing surface 21b that seals the opening 21a in contact with a seal 252a (see FIG. 26) provided in the aspiration tube 252. Thereby, the reagent storage 10 can be sealed easily and effectively by contact between the seal 252a and the sealing surface 21b.

The sealing surface 21b may be a top surface of the opening portion 21, an inner surface of the opening portion 21, or an outer surface of the opening portion 21. In the example of FIG. 2, the sealing surface 21b is an annular top surface of the opening portion 21 surrounding the opening 21a (i.e., the rim of the opening 21a), and is in vertical contact with the seal 252a (see FIG. 26) provided in the aspiration tube 252.

The opening portion 21 may, for example, be fitted with a removable cap. In that case, the reagent container 100 is provided to the user with the opening 21a sealed by the cap, and the cap is removed to install the reagent container 100 in the analyzer 300.

Also, for example, a puncturable sealing film may be welded to the upper surface of the opening portion 21 to cover the opening 21a. The reagent container 100 is provided to the user with the opening 21a sealed by the sealing film, and after the reagent container 100 is installed in the analyzer 300, the opening 21a may be opened by puncturing the sealing film with the aspiration tube 252.

As illustrated in FIG. 3, the opening portion 21 is formed in a mounting member 22 attached to the reagent storage 10. The opening portion 21 is formed integrally with the mounting member 22 so that the opening portion 21 protrudes upwardly from the upper surface of the mounting member 22.

The mounting member 22 is made of a resin material formed separately from the reagent storage 10. The resin material comprising the mounting member 22 is, for example, a thermoplastic resin, specifically polyethylene (PE). The resin material comprising the mounting member 22 may be polypropylene (PP), polyethylene terephthalate (PET), etc.

The outer periphery of the mounting member 22 is welded to the inner periphery of the reagent storage 10. The mounting member 22 is provided at the upper end of the reagent storage 10 so as to be sandwiched between the outer circumferential edges of the two laminated structural film materials 11 comprising the reagent storage 10, and is welded to the inner surfaces of the two laminated structural film materials 11, respectively. The space between the outer periphery of the mounting member 22 and the reagent storage 10 is sealed by welding. Thereby, the mounting member 22 with rigidity can be easily provided in the flexible bag-shaped reagent storage 10 for coupling with the movement control member 23, and sealing between the mounting member 22 and the reagent storage 10 can be easily achieved.

The mounting member 22 includes a supported portion 22a that is provided horizontally spaced apart from the opening portion 21. The mounting member 22 has an elongated hexagonal shape, and the opening portion 21 is provided at one end of the mounting member 22 in the longitudinal direction, and the supported portion 22a is provided at the other end. The supported portion 22a is a projection integrally formed on the mounting member 22 so as to project upwardly from the top surface of the mounting member 22. The supported portion 22a has a T-shape as viewed from the first direction A, and a root section is thinner than the upper part.

Here, the opening portion 21 is provided near the end of the reagent storage 10 in the horizontal direction. Even when the reagent storage 10 is swollen by storing the reagent 12 (see FIG. 5), the opening portion 21 of the mounting member 22 is relatively close to the inner surface of the reagent storage 10. Therefore, when the aspiration tube 252 is inserted at an inclination with respect to the central axis of the opening portion 21, the aspiration tube 252 may come into contact with the inner surface of the reagent storage 10.

Thereupon, the opening portion 21 includes an aspiration tube guiding portion 21c that protrudes downwardly from the lower end of the opening 21a toward the interior of the reagent storage 10. The aspiration tube guiding portion 21c is integrally formed in the mounting member 22 and has a shape of the lower end of the cylindrical opening portion 21, partially extended downward. The aspiration tube guiding portion 21c is formed in a shape of a wall to compartmentalize the aspiration tube 252 inserted into the opening 21a and the inner surface of the reagent storage 10. Thereby, even when the aspiration tube 252 is inserted into the interior of the reagent storage 10 at an angle to the central axis of the opening 21a, the tip of the aspiration tube 252 can be guided so that contact between the tip of the aspiration tube 252 and the inner surface of the reagent storage 10 is prevented.

As illustrated in FIG. 4 and FIG. 5, the aspiration tube guiding portion 21c is provided to partition the space between the aspiration tube 252 inserted into the opening 21a and the inner surface of the reagent storage 10. On the other hand, since there is no risk of contact between the tip of the aspiration tube 252 and the inner surface of the reagent storage 10 on the central side of the reagent storage 10 (see FIG. 5), the aspiration tube guiding portion 21c is not formed in the horizontal plane toward the center of the reagent storage 10. Therefore, the aspiration tube guiding portion 21c has a C-shaped cross-sectional shape (see FIG. 4) surrounding the aspiration tube 252 that is inserted into the opening 21a.

### (Movement control member)

Returning to FIG. 2, the movement control member 23 includes a function of positioning the opening 21a with respect to the aspiration tube 252 of the analyzer 300. Also, the movement control member 23 includes a function of preventing misalignment of the opening 21a.

The movement control member 23 is fixed to the opening portion 21 so as to protrude horizontally from the opening portion 21. Thereby, a relative position of the movement control member 23 and the opening 21a can be fixed. Further, the horizontally protruding part of the movement control member 23 from the opening portion 21 makes it easy to realize a configuration that contacts a part of the analyzer 300 and regulates its movement, and a contact area required to prevent misalignment of the opening 21a through contact can be easily obtained.

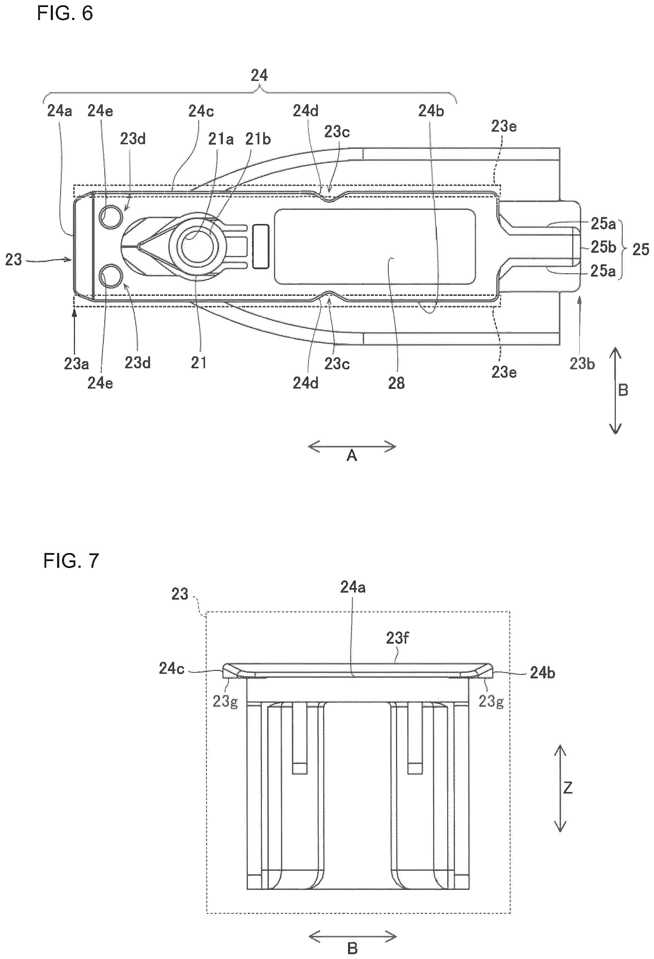

As illustrated in FIG. 3, the movement control member 23 has a flat plate shape in a simple overview. The movement control member 23 has a shape extending along the first direction A in the horizontal plane. The movement control member 23 has, in a plan view (see FIG. 6), a rectangular shape including a pair of long sides extending in the first direction A and a pair of short sides extending in the second direction B. As described below, the reagent container 100 is installed in the container holder 251 by being inserted along the first direction A into the interior of the container holder 251 of the analyzer 300 with one end 23a side of the movement control member 23, where the opening portion 21 is provided, first.

The movement control member 23 comprises a resin material. The resin material comprising the movement control member 23 is, for example, a thermoplastic resin, specifically polyethylene (PE). The resin material comprising the movement control member 23 may be polypropylene (PP), polyethylene terephthalate (PET).

As illustrated in FIG. 6, the movement control member 23 is fixed to the opening portion 21 between one end 23a in the first direction A and the center of the movement control member 23. In other words, for one end 23a and the other end 23b of the movement control member 23, the opening portion 21 is provided closer to the one end 23a side. Thereby, by gripping the other end 23b side of the movement control member 23 and moving the reagent container 100 in the first direction A, the opening 21a formed in the opening portion 21 at the one end 23a side can be placed at a position directly below the aspiration tube 252. In this case, since the opening portion 21 is away from the other end 23b of the movement control member 23, the user's fingers can be prevented from coming into contact with the aspiration tube 252 when the reagent container 100 is installed.

### <Movement control in the horizontal direction>

The movement control member 23 is configured to control the horizontal movement of the opening 21a by contacting a part of the analyzer 300 in the horizontal direction. As a result, the movement control member 23 can prevent the horizontal positional relationship between the opening 21a and the aspiration tube 252 from shifting.

The movement control member 23 includes a horizontal contacting surface 24 including any of: an inner surface of a hole formed in the movement control member 23, an inner surface of a notch formed in the movement control member 23, and a side surface of the movement control member 23. Thereby, the horizontal contacting surface 24 to restrict the horizontal movement of the opening 21a can be provided in the movement control member 23 with a simple configuration.

Specifically, the horizontal contacting surface 24 includes a first surface 24a that includes a side surface (i.e., a tip surface) formed at one end 23a in the first direction A of the movement control member 23. Thereby, when the reagent container 100 is installed in the analyzer 300, by simply advancing the reagent container 100 in the first direction A until one end 23a of the movement control member 23 runs into the inner surface of the container holder 251, both alignment and movement restriction of the opening 21a in the first direction A can be easily achieved.

The horizontal contacting surface 24 includes second surfaces 24b, 24c that includes a side surface extending along the first direction A of the movement control member 23. The second surfaces 24b, 24c are a pair of sides including a long side of the movement control member 23 in a plan view, and are provided on one side and the other side of the movement control member 23 in the second direction B. Thereby, by the sides of the movement control member 23, both the alignment and movement regulation of the opening 21a in the second direction B can be easily achieved. In FIG. 6, the second sides 24b, 24c are provided at the most outside in the second direction B in the movement control member 23.

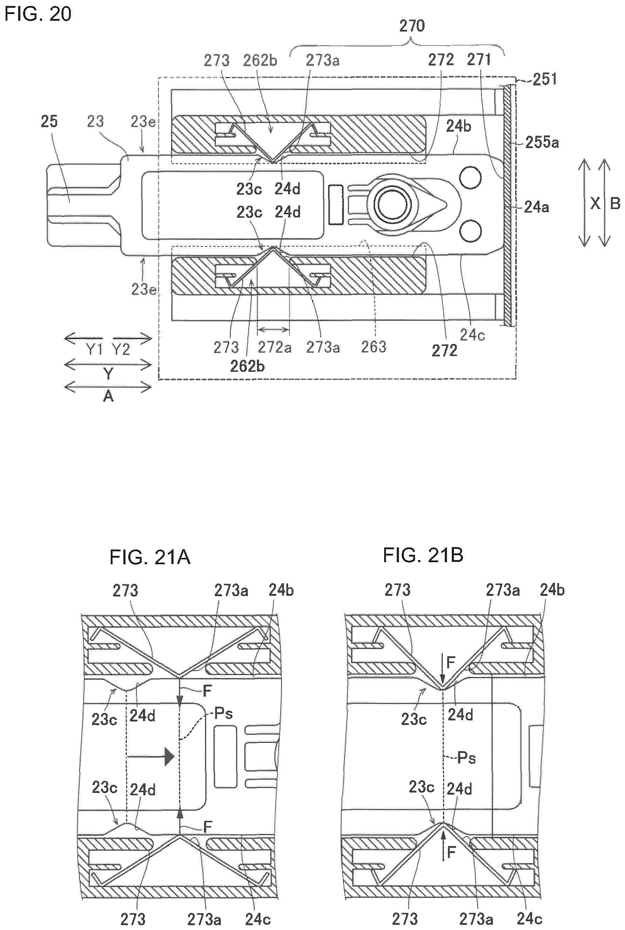

As described below, the movement control member 23 is formed to face the inner surface of the container holder 251 of the analyzer 300 (see FIG. 20) in each of the first direction A and second direction B, which are mutually orthogonal in the horizontal plane. Thereby, the movement control member 23 is in contact with the inner surface of the container holder 251, so that misalignment of the opening 21a in both the first direction A and the second direction B can be suppressed. Also, as described below, when the distance between the movement control member 23 and the opposite surface (inner surface of the container holder 251) is set within an allowable range of misalignment, by preventing misalignment of 21a beyond the allowable range and allowing a slight misalignment, an operation of installing the reagent container 100 can be done easily.

As illustrated in FIG. 6, the movement control member 23 includes a notch 23c that is formed on side. The horizontal contacting surface 24 includes a third surface 24d including an inner surface of the notch 23c. The third surface 24d contacts a part of the analyzer 300 that enters into the notch 23c. Thereby, the third surface 24d in the notch 23c and a part of the analyzer 300 are contacted, so that the movement control member 23 and the analyzer 300 can be contacted. The contact can effectively suppress shifting of the position of the opening 21a. Also, when the reagent container 100 is installed in the analyzer 300, the movement control member 23 contacts a part of the analyzer 300 and does not move, so that the user can perceive that the reagent container 100 is installed in the proper position by feeling without seeing the reagent container 100.

The notch 23c is formed in a V-shape on the second surfaces 24b and 24c, and the third face 24d includes a V-shaped bent sloping surface. Therefore, when the third surface 24d is in contact with a part of the analyzer 300, the part of the analyzer 300 can be guided toward an inflection point (the most depressed portion) of the third surface 24d. In other words, the contact position of the third surface 24d can be precisely determined.

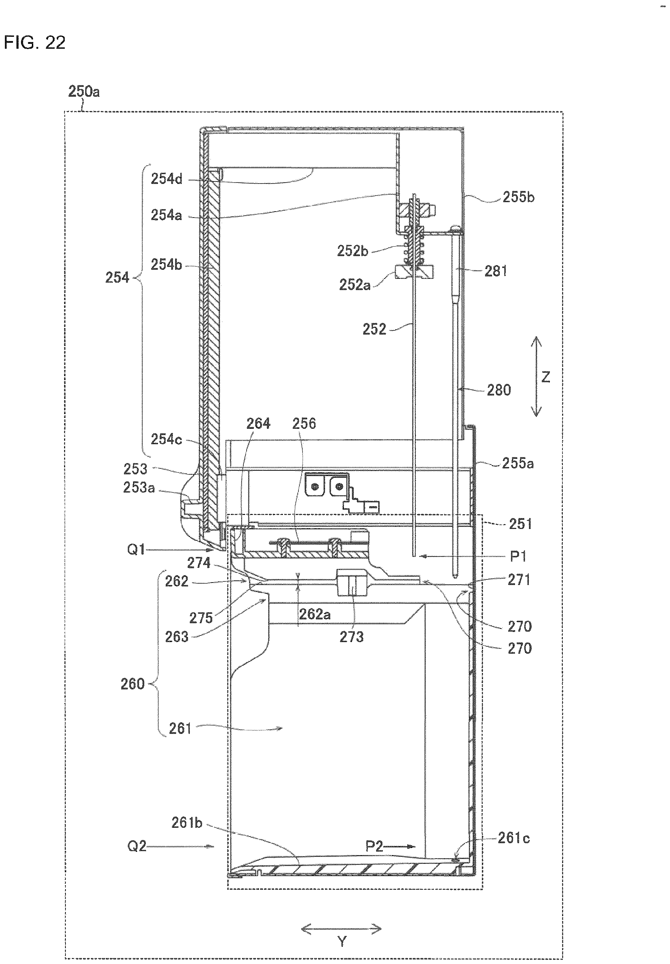

In addition, the movement control member 23 includes a hole 23d that is formed on the upper surface of the movement control member. The horizontal contacting surface 24 includes a fourth surface 24e that includes an inner surface of the hole 23d. The fourth surface 24e contacts a part of the analyzer 300 (an entry member 281 described below, see FIG. 22) that enters the interior of the hole 23d. Thereby, by a part of the analyzer 300 entering the hole 23d formed in the movement control member 23, the movement control member 23 and the analyzer 300 can be contacted. The contact can effectively suppress the shifting of the position of the opening 21a.

In FIG. 6, the hole 23d is a through hole through the movement control member 23 in a thickness direction (Z direction). The hole 23d is provided between one end 23a in the first direction A and the opening portion 21 in the movement control member 23. By providing the hole 23d close to the opening portion 21, when the analyzer 300 is in contact with the hole 23d, the horizontal position of the opening portion 21 can be positioned more precisely and the opening portion 21 can be fixed. In FIG. 6, two of the hole 23d are provided. The two of the hole 23d are aligned along the second direction B. Only one hole 23d may be provided.

The movement control member 23 includes a guiding portion 23e that guides the movement of the opening 21a in placing the opening 21a below the aspiration tube 252 of the analyzer 300. The guiding portion 23e extends along the first direction A in the horizontal plane. The guiding portion 23e slides in contact with a part of the analyzer 300 to adjust a movement direction of the movement control member 23 with the first direction A. Therefore, when the reagent container 100 is installed in the container holder 251 of the analyzer 300, the opening 21a can be easily and accurately provided to the proper position where the aspiration tube 252 can be inserted.

The guiding portion 23e is provided to extend in a straight line from one end 23a to a grip 25 on the other end 23b side of the movement control member 23. In the example of FIG. 6, the guiding portion 23e is a side surface extending along the first direction A of the movement control member 23. In other words, the guiding portion 23e includes the second surfaces 24b, 24c. Since the notches 23c are provided on the second surfaces 24b, 24c, the guiding portion 23e is provided intermittently from the one end 23a to the grip 25. The guiding portions 23e is provided on both sides of the movement control member 23 in the second direction B.

### <Movement control in the vertical direction>

The movement control member 23 is configured to regulate the vertical movement of the opening 21a by contacting a part of the analyzer 300 in the vertical direction (Z direction). As a result, even the reagent container 100 that includes the bag-shaped reagent storage 10, which is easily deformed, can restrict the opening 21a to move in the vertical direction when the aspiration tube 252 is inserted into the interior of the reagent storage 10 and when the aspiration tube 252 is pulled out from the interior of the reagent storage 10.

As illustrated in FIG. 7, the movement control member 23 includes an upper surface 23f and a lower surface 23g that are in contact with a part of the analyzer 300 in the vertical direction (Z direction). As a result, the movement of the opening 21a in the vertical direction can be controlled by a simple configuration.

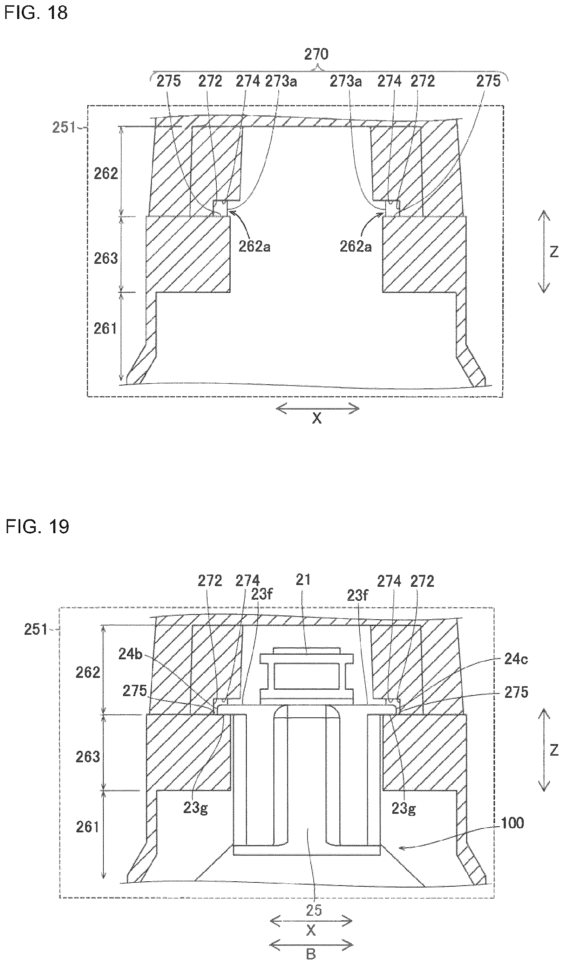

The movement control member 23 is formed so as to face the inner surface of the container holder 251 (see FIG. 19) of the analyzer 300 in each of the upward direction and the downward direction. Thereby, the movement of the opening 21a in both the upward direction and downward direction can be restrained by the movement control member 23 contacting the inner surface of the container holder 251. Also, when the distance between the movement control member 23 and the opposite surface (the inner surface of the container holder 251) is set within an allowable range of misalignment, by preventing the movement of the opening 21a beyond the allowable range and allowing a slight movement, the operation of installing the reagent container 100 can be done easily.

### <Grip>

As illustrated in FIG. 6, the movement control member 23 includes the grip 25 to grip the movement control member 23 at the other end 23b of the movement control member 23 in the first direction A. Thereby, the other end 23b side of the movement control member 23 can be easily gripped. Also, since the bag-shaped reagent storage 10 is easily deformed and difficult to grip, by providing the grip 25 in the movement control member 23, the reagent container 100 can be carried easily.

The grip 25 has a flat plate shape extending along the horizontal direction or the vertical direction. In the example of FIG. 6, the grip 25 has a flat plate shape extending along the vertical direction at the other end 23b of the movement control member 23. In the grip 25, a pair of grip sides 25a is formed extending along the first direction A and the vertical direction (Z direction). Thereby, the grip 25 can be gripped as if it is pinched from both sides. A gripping form of holding between fingers makes it easy for the user to apply force even in a relatively small area, and the reagent container 100 can be gripped stably.

The grip 25 is provided in the center of the second direction B at the other end 23b of the movement control member 23. The width of the grip 25 (the distance between a pair of grip sides 25a) is smaller than the distance between the pair of the second surfaces 24b and 24c. As illustrated in FIG. 6, a wall 25b is provided on the other end 23b side of the pair of grip sides 25a. As illustrated in FIG. 5, the inner space enclosed by the pair of grip sides 25a and the wall 25b is hollow, and a corner of the reagent storage 10 (a corner of the other end 23b side of the upper part of the reagent storage 10) is held in the inner space. Therefore, the corner of the reagent storage 10 is not exposed near the grip 25, and the user does not touch the corner of the reagent storage 10 when the user grips the grip 25.

### <Installation structure of the movement control member and the reagent storage>

The movement control member 23 is fixed to the opening portion 21 as described above. Since the mounting member 22, in which the opening portion 21 is formed, is joined to the reagent storage 10, the movement control member 23 is connected to the reagent storage 10 at the opening portion 21. When the reagent container 100 is carried, the movement control member 23 also functions as a support member to support the weight of the reagent storage 10 storing a reagent.

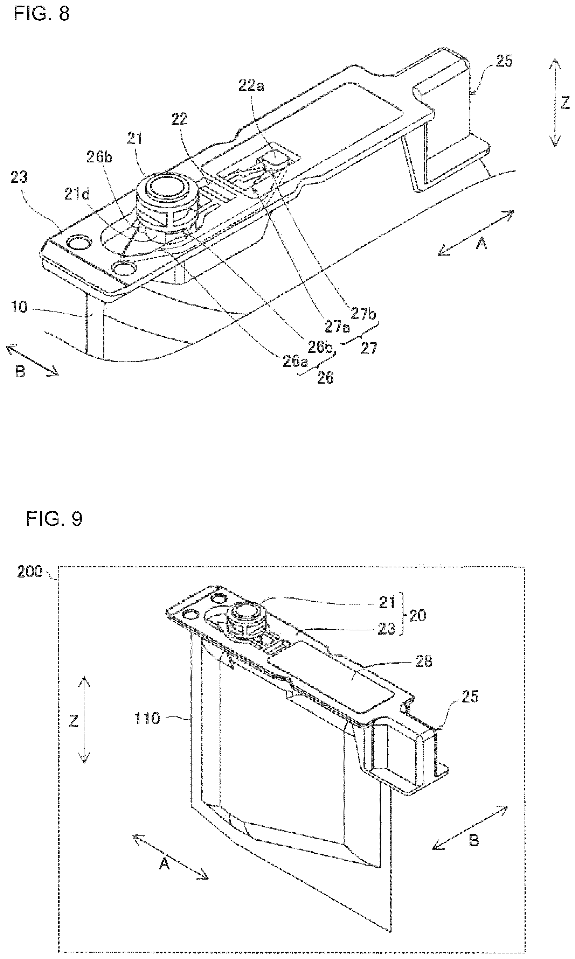

As illustrated in FIG. 3 and FIG. 8, the movement control member 23 includes a fixing portion 26 that is fixed to the opening portion 21 and a supporting portion 27 that supports the upper part of the reagent storage 10 at a position away from the opening portion 21. Thereby, when carrying the reagent container 100, the reagent storage 10 can be supported so as to be suspended from the movement control member 23 at multiple locations of the fixing portion 26 and the supporting portion 27. Since the weight of the reagent storage 10 is distributed and acts on the multiple locations of the movement control member 23, the reagent storage 10 can be stably supported even if the capacity of the reagent storage 10 is increased. In addition, for the user, handling of the reagent container 100 becomes easier because the user does not have to grip the bag-shaped part, which is easily deformed.

The fixing portion 26 is provided between the center of the movement control member 23 and the one end 23a in the first direction A. The fixing portion 26 includes a through hole 26a through the movement control member 23 in the thickness direction (vertical direction) and an engaging piece 26b that engages a neck 21d of the opening portion 21. The through hole 26a is formed to a size through which the opening portion 21 can pass. The engaging piece 26b is provided in the through hole 26a in a pair, and the neck 21d is sandwiched between the pair of the engaging pieces 26b.

The supporting portion 27 is provided at the center of the movement control member 23 in the first direction A. The supporting portion 27 includes a first through hole 27a that penetrates the movement control member 23 in a thickness direction (vertical direction), and a slit-shaped second through section 27b extending from the first through hole 27a in the first direction A. The first through hole 27a is formed to be large enough to allow the whole supported portion 22a of the reagent storage 10 to pass through. The second through section 27b is formed to a size (width) through which a root section of the supported portion 22a can pass and a wide upper part of the supported portion 22a cannot pass.

As described above, on the upper surface of the mounting member 22, the opening portion 21 and the supported portion 22a are spaced apart in the first direction A. The fixing portion 26 and the supporting portion 27 of the movement control member 23 are lined up along the first direction A at a spacing equal to the spacing between the opening portion 21 and the supported portion 22a of the mounting member 22. As illustrated in FIG. 8, the fixing portion 26 is fixed to the opening portion 21, and the supporting portion 27 is fixed to the supported portion 22a.

Therefore, even in the case where a bag-shaped reagent storage 10 is provided with multiple fixing points of the opening portion 21 and the supported portion 22a to which the movement control member 23 is fixed, both the opening portion 21 and the supported portion 22a can be formed in one mounting member 22, so that the structure of the reagent container 100 can be simplified.

A method of installing the movement control member 23 to the reagent storage 10 is described below. As illustrated in FIG. 3, the movement control member 23 is approached from above against the reagent storage 10 in a state, in which the through hole 26a of the fixing portion 26 and the first through hole 27a of the supporting portion 27 aligned horizontally with the opening portion 21 and the supported portion 22a at the top of the reagent storage 10. Thereby, the opening portion 21 is inserted into the through hole 26a, and the supported portion 22a is inserted into the first through hole 27a. Then, the movement control member 23 is moved relative to the opening portion 21 in the first direction A. Thereby, as illustrated in FIG. 8, the neck 21d is pinched into a gap between the pair of engaging pieces 26b, and the fixing portion 26 and the opening portion 21 are fixed. Also, the root section of the supported portion 22a is inserted from the first through hole 27a into the second through section 27b, and the supported portion 22a is engaged with the second through section 27b (supporting portion 27) in the vertical direction.

### <Information storage medium>

As illustrated in FIG. 2, the frame 20 includes an information storage medium 28, on which information on a reagent is stored. The information storage medium 28 is an RFID (radio frequency identifier) tag. This allows the analyzer 300 to read the information of a reagent from the information storage medium 28 when the reagent container 100 is installed in the analyzer 300. When the information storage medium 28 is provided in the bag-shaped reagent container 100, which is easy to deform, the information storage medium 28 may be difficult to provide or the information storage medium 28 may be difficult to read; however, by providing the information storage medium 28 in the movement control member 23, the information storage medium 28 can be easily provided and can be read well.

The information storage medium 28 has a flat plate shape and is provided in the center of an upper surface 23f of the movement control member 23 (see FIG. 5). In FIG. 2, the information storage medium 28 is provided to cover the supporting portion 27 of the movement control member 23 (see FIG. 3).

### <Reagent>

The reagent 12 stored in the reagent storage 10 is liquid. The reagent 12 is a water solution that includes a component according to an analysis item by a sample analysis. The reagent container 100 stores, as a reagent, a staining solution to stain a predetermined cell. The staining solution includes, for example, various fluorescent dyes to stain a white blood cell, red blood cell, cell organelle, platelet, etc. in blood.

The storage period of the reagent is between 75 days and one year after the aspiration tube 252 is inserted into the opening 21a. The storage period is the length of time during which the accuracy of measurement using the reagent by the analyzer 300 can be guaranteed. In the present embodiment, in a state in which the aspiration tube 252 is inserted into the opening 21a and the interior of the reagent storage 10 is sealed, the measurement accuracy is maintained for a period of not less than 75 days and not more than 1 year. Since deterioration of the reagent can be suppressed by sealing the reagent storage 10, the quality of the reagent can be maintained stably over a longer period of time. As a result, the frequency of replacing the reagent (reagent container 100) can be reduced, thereby reducing the burden on the user involved in the replacement work.

### <Types of the reagent container>

The reagent container 100 may have a different shape depending on the amount of reagent to be stored.

For example, FIG. 2 to FIG. 6 illustrates the reagent container 100 with a large capacity. The reagent storage 10 of the reagent container 100 stores a reagent, which is 200 mL or more and 500 mL or less. Therefore, the reagent container 100 that has a relatively large capacity of 200 mL or more and 500 mL or less is achieved. As a result, the frequency of replacing the reagent (reagent container 100) in the analyzer 300 can be reduced. On the other hand, the larger capacity of the reagent storage volume increases the period of time until the reagent is fully consumed. In the present embodiment, since deterioration of the reagent can be suppressed by sealing the reagent storage 10, the reagent quality can be maintained even if the reagent storage volume is increased and the period of use of the reagent is prolonged.

FIG. 9 illustrates a reagent container 200 with a small capacity. A reagent storage 110 of the reagent container 200 stores a reagent of 20 mL or more and 100 mL or less. Thus, even the reagent container 200 with a relatively small capacity is preferable because deterioration of the reagent can be suppressed by sealing the reagent storage 110.

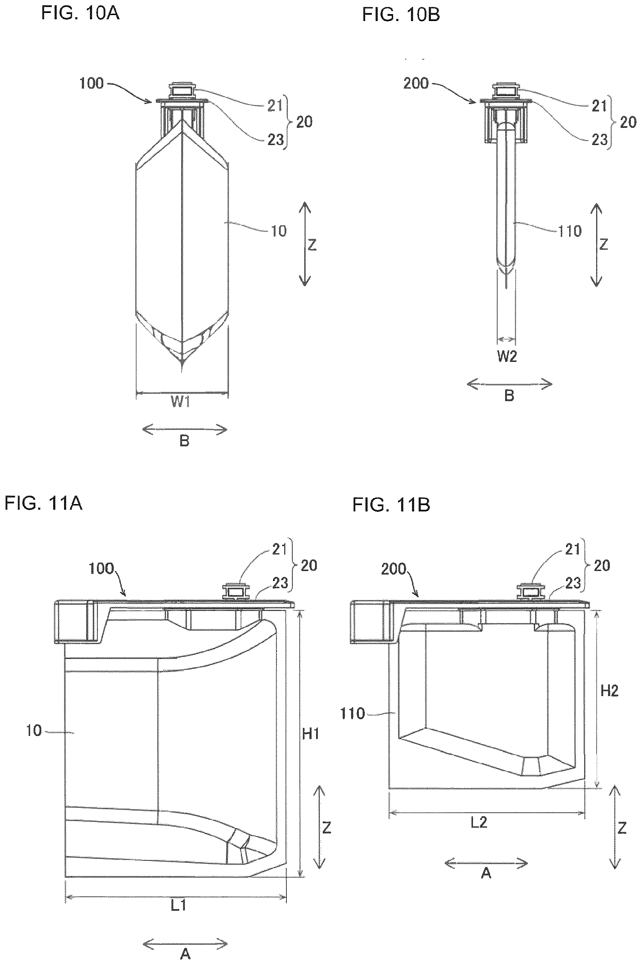

FIG. 10 and FIG. 11 illustrate the reagent container 100 and the reagent container 200 side by side. Comparing the reagent storage 10 and the reagent storage 110, a length L1 in the first direction A, a thickness W1 in the second direction B, and a length H1 in the vertical direction of the reagent storage 10 are all larger than a length L2 in the first direction A, a thickness W2 in the second direction B, and a length H2 in the vertical direction of the reagent storage 110.

The large-capacity reagent container 100 and the small-capacity reagent container 200 have structures that are partially common. In other words, the large-capacity reagent container 100 and the small-capacity reagent container 200 have the frame 20 with the same shape. On the other hand, the large-capacity reagent container 100 and the small-capacity reagent container 200 have different shapes of the reagent storages (10, 110). It is preferable that the shape of the frame 20 having the opening portion 21 and the movement control member 23 is the same for the reagent container 100 and the reagent container 200, so that a structure for inserting the aspiration tube 252 and a structure for positioning and restraining misalignment of the opening 21a in the analyzer 300 can be commonly applied to both the reagent container 100 and the reagent container 200.

### [Analyzer]

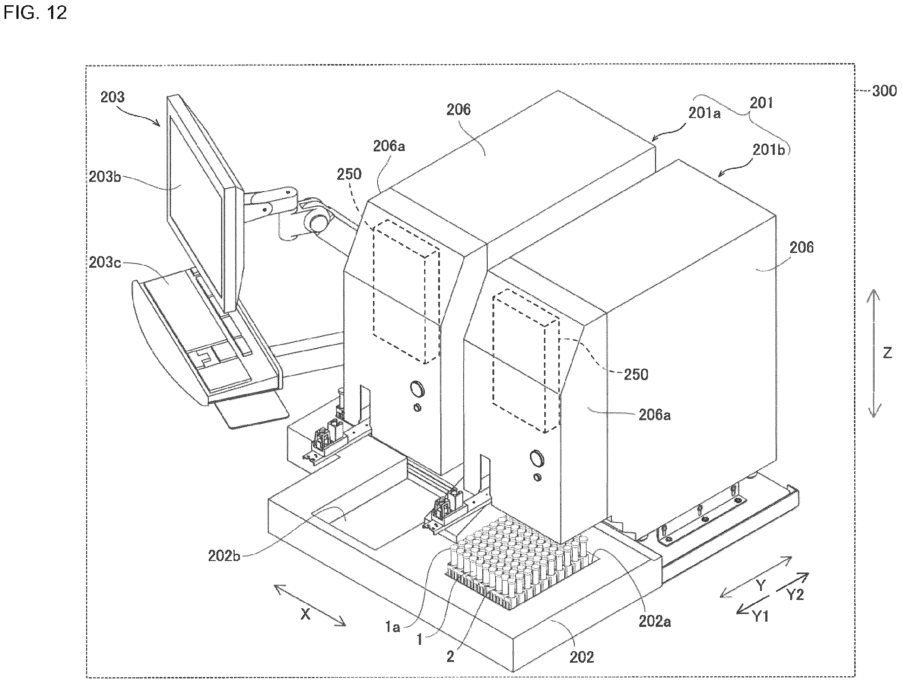

Next, the analyzer 300 of the present embodiment is described. The analyzer 300 illustrated in FIG. 12 is an automatic measurement unit that aspirates the reagent 12 in the reagent container 100 (see FIG. 5) and performs an analysis of a sample using the aspirated reagent 12. Hereinafter, in the horizontal plane, the left and right directions of the analyzer 300 are referred to as an X direction, and the front and rear directions (depth) of the analyzer 300 are referred to as a Y direction.

As illustrated in FIG. 12, the analyzer 300 includes a measurement unit 201, a sample transporting apparatus 202 provided on the front side (arrow Y1 direction side) of the measurement unit 201, and an analyzing device 203 that constitutes of a PC (personal computer) connected electrically to each of the measurement unit 201 and the sample transporting apparatus 202.

FIG. 12 illustrates an example, in which the analyzer 300 includes two measurement units 201 lined up in the X direction. Each measurement unit 201 includes a unit cover 206 that houses a measurement mechanism inside, respectively. The two measuring units 201 are respectively referred to as a first measurement unit 201a and a second measurement unit 201b. The second measurement unit 201b may perform an analysis of a different measurement item from the first measurement unit 201a.

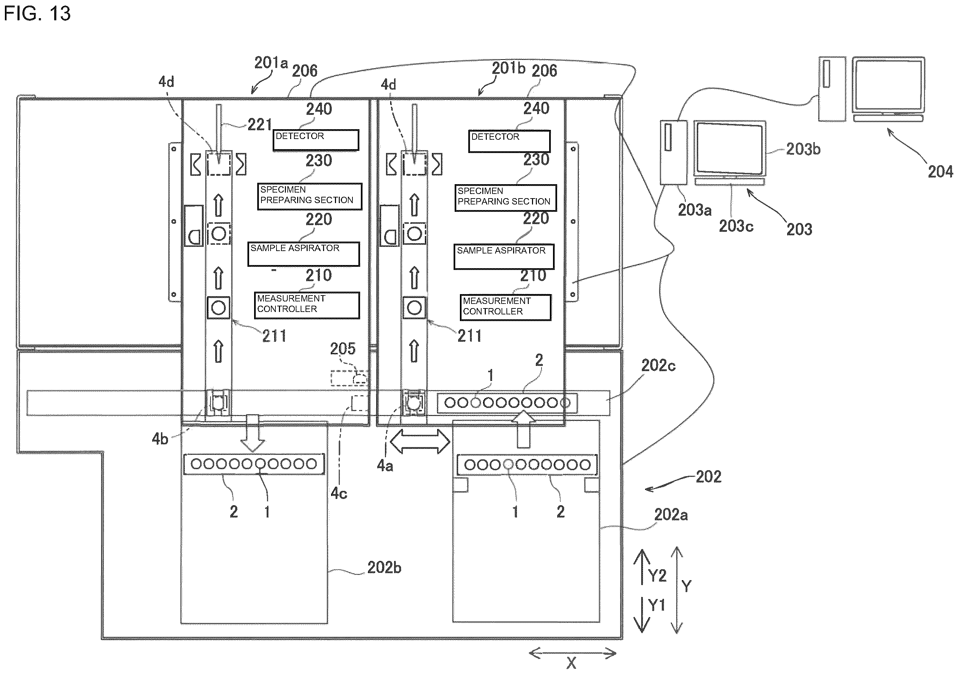

As illustrated in FIG. 13, the sample transporting apparatus 202 includes: a pre-analysis rack holder 202a that is capable of holding a plurality of racks 2, in which a sample container 1 storing a sample before analysis is stored; a post-analysis rack holder 202b that is capable of holding a plurality of racks 2, in which the sample container 1 storing a sample after analysis is stored; a rack transporter 202c that moves the rack 2 horizontally in a straight line in the X direction; and a bar code reader 205.

The sample transporting apparatus 202 is configured to move the racks 2 held in the pre-analysis rack holder 202a one by one onto the rack transporter 202c.

The sample transporting apparatus 202 is configured to transport the rack 2 on the rack transporter 202c in the X direction and to place a predetermined sample container 1 held in the rack at an intake position 4b where the first measurement unit 201a takes in a sample, a taking position 4a where the second measurement unit 201b takes in the sample, and a reading position 4c where the bar code reader 205 reads a bar code of the sample container 1. The sample transporting apparatus 202 is configured to transport the rack 2 after analysis is performed from the rack transporter 202c to the post-analysis rack holder 202b.

As illustrated in FIG. 12 and FIG. 13, the analyzing device 203 comprises a personal computer (PC) and mainly includes a controller 203a including a CPU, ROM, RAM, etc. (see FIG. 13), a display 203b, and an input device 203c. Also, the display 203b is provided to display an analysis result that is obtained by analyzing data of a digital signal transmitted from the first measurement unit 201a and the second measurement unit 201b. The analyzing device 203 is connected to a host computer 204.

The controller 203a includes a CPU, ROM, RAM, hard disk, an input/output interface, and a communication interface, etc., and functions as the analyzing device 203 by the CPU executing an application program. By the controller 203a, operations of each section of the first measurement unit 201a, the second measurement unit 201b, and the sample transporting apparatus 202 are controlled. Also, a measurement result database is installed on a hard disk of the controller 203a.

The controller 203a is configured to analyze a component to be analyzed using a measurement result transmitted from the first measurement unit 201a and the second measurement unit 201b and to obtain an analysis result (red blood cell count, platelet count, hemoglobin level, white blood cell count, etc.). Thus, the analyzer 300 of the present embodiment is a blood cell counter that counts a tangible component in a sample.

As illustrated in FIG. 13, each measurement unit 201 (201a, 201b) includes a measurement controller 210, a sample aspirator 220 to aspirate a sample, a specimen preparing unit 230 to prepare a measurement specimen by mixing a sample and a reagent, and a detector 240 to detect a component in the measurement specimen.

The measurement controller 210 includes a processor, a memory, a driver circuit, an input/output interface, a communication interface, etc. The measurement controller 210 communicates with the controller 203a of the analyzing device 203. The measurement controller 210 controls operations of each section of the sample aspirator 220, specimen preparing unit 230, detector 240, etc. in the measurement unit 201 based on a measurement instruction from the controller 203a. The measurement controller 210 outputs information of a reagent that is obtained from a reader 256, which is described later, and a measurement result that is obtained from the detector 240 to the controller 203a.

As illustrated in FIG. 14, the sample aspirator 220 includes a piercer 221 that is an aspiration tube, through which a sample passes inside, and a metering section 222. The piercer 221 is formed so that its tip can penetrate (puncture) a sealed lid 1a of the sample container 1. Also, the piercer 221 is configured to be movable by a motor between an aspiration position of a sample from the sample container 1 and a reaction chamber 231 described below. The metering section 222 comprises a syringe pump and has a function of aspirating a predetermined amount of sample from the sample container 1 via the piercer 221 and discharging the sample into the reaction chamber 231.

The specimen preparing unit 230 includes a reagent aspirator 250 to aspirate a reagent from the reagent container 100. Also, the specimen preparing unit 230 includes the reaction chamber 231. The reaction chamber 231 is configured to mix and react a sample (blood) aspirated by the sample aspirator 220 and a reagent supplied from the reagent aspirator 250. Although only one reaction chamber is illustrated in FIG. 14, a plurality of reaction chambers 231 are provided according to a measurement type. In each reaction chamber 231, multiple types of reagents (staining solutions) are supplied according to the measurement items, and a measurement specimen according to various measurement items is prepared through the mixing and reaction processes of a sample and a reagent. The prepared measurement specimen is then supplied to the detector 240.

The specimen preparing unit 230 includes a metering section 232 that is connected to the aspiration tube 252 of the reagent aspirator 250 and aspirates a fixed amount of reagent and electromagnetic valves 233a and 233b that open and close the flow paths when transferring the aspirated reagent to the metering section 232 and the reaction chamber 231. The metering section 232 is made of a syringe pump, a diaphragm pump, etc. Also, the specimen preparing unit 230 includes a metering section 234 and electromagnetic valves 235a and 235b to transport a reagent (hemolytic agent) from a large volume reagent container 3 located outside the measurement unit.

The metering section 232 can aspirate a predetermined amount of reagent inside the reagent container 100 (200) via the aspiration tube 252 into the inside of the metering section 232 by opening the electromagnetic valve 233a and closing the electromagnetic valve 233b when the aspiration tube 252 is inserted into the reagent container 100 (or 200). The metering section 232 is configured so that the reagent metered inside the metering section 232 can be transported to the reaction chamber 231 by closing the electromagnetic valve 233a and opening the electromagnetic valve 233b.

The detector 240 includes an FCM measurement section 241 that detects a tangible component, such as a white blood cell (WBC), in a sample by a flow cytometry method using a semiconductor laser. A measurement result obtained in the detector 240 is transmitted to the analyzing device 203 as measurement data (measurement result) of a sample by the measurement controller 210 (see FIG. 13).

The analyzing device 203 analyzes a detection signal of the detector 240. The analyzing device 203 analyzes individual particles based on the light detected by the FCM measurement section 241. The analyzing device 203 creates a scattergram combining the scattered light intensity and fluorescence intensity as parameters, classifies a tangible component in a specimen based on the distribution of the scattergram, and counts the tangible component for each classified type. A measurement item by the flow cytometry method includes a NEUT (neutrophil), LYMPH (lymphocyte), MONO (monocyte), EO (eosinophil), BASO (basophil), etc.

Also, the detector 240 conducts a detection by a sheath flow DC detection method. That is, the detector 240 passes a particle such as a cell in a flow of sheath fluid passing through a micro opening, and applies a DC current between a pair of electrodes provided opposite each other across the micro opening. The detector 240 outputs a pulse-shaped current change as a particle passes through the micro opening as a result of detection by the sheath flow DC detection method. The analyzing device 203 counts individual particles based on the current change. A measurement item by the sheath flow DC detection method includes the RBC (red blood cell) count.

Also, the detector 240 conducts an HGB detection (detection of hemoglobin in blood) by an SLS-hemoglobin method. Measurement light is irradiated from a light source to a measurement specimen, in which a hemolytic agent and a sample are mixed, and the amount of transmitted light of the measurement specimen is obtained by a light receiver. The detector 240 outputs a transmitted light intensity change in a process of forming an SLS-hemoglobin as a detection result of the SLS-hemoglobin method. The analyzing device 203 calculates the hemoglobin concentration (HGB) in the measurement specimen based on the transmitted light intensity change.

As illustrated in FIG. 14, the reagent aspirator 250 includes a container holder 251, an aspiration tube 252, an operator 253, and a movement mechanism 254.

The container holder 251 holds the reagent container 100 (200) that includes the reagent storage 10 (110) and the frame 20 including the opening 21a (see FIG. 2).

The aspiration tube 252 aspirates a reagent in the reagent container 100 (200) held by the container holder 251. The aspiration tube 252 is inserted into the opening 21a from above the reagent container 100 (200) held by the container holder 251. The aspiration tube 252 is configured to seal the interior of the reagent storage 10 when inserted into the opening 21a. The upper end of the aspiration tube 252 is connected to a flow path leading to the metering section 232 and the reaction chamber 231.

The operator 253 is configured to receive a predetermined operation to move the aspiration tube 252 from a user of the analyzer 300. The movement mechanism 254 moves the reagent container 100 (200) and the aspiration tube 252 relative to each other in conjunction with the predetermined operation accepted by the operator 253. The movement mechanism 254 is configured to move the aspiration tube 252 into the reagent container 100 (200) held in the container holder 251 and to move the aspiration tube 252 out of the reagent container 100 (200) by the relative movement.

Thus, in the analyzer 300 of the present embodiment, the user does not need to perform an operation to insert the aspiration tube 252 into the opening 21a of the reagent container 100 (200) prior to installation of the reagent container 100 (200) so that the reagent container 100 (200) can be easily installed in the analyzer 300. Also, since the interior of the reagent storage 10 (110) is sealed when the aspiration tube 252 is inserted, the reagent in the reagent container 100 (200) is prevented from contacting the outside air. Therefore, deterioration of the reagent after installation in the analyzer 300 can be suppressed.

The aspiration tube 252 is configured to seal the interior of the reagent storage 10 (110) by restricting the inflow of air into the opening 21a. Thereby, deterioration of the reagent due to contact of the reagent inside the reagent storage 10 (110) with air can be suppressed. As a result, the reagent quality can be maintained for a longer period of time when the interior of the reagent storage 10 (110), into which the aspiration tube 252 is inserted, is sealed.

### (Structure of the reagent aspirator)

Next, the detailed structure of the reagent aspirator 250 is described.

As illustrated in FIG. 12, the reagent aspirator 250 is provided inside the unit cover 206. On the front side of the unit cover 206, a front cover 206a that can open and close is provided. The reagent aspirator 250 is provided at the upper front side of the measurement unit 201 and is exposed to outside when the front cover 206a is opened. This allows the user to easily replace the reagent containers 100 and 200.

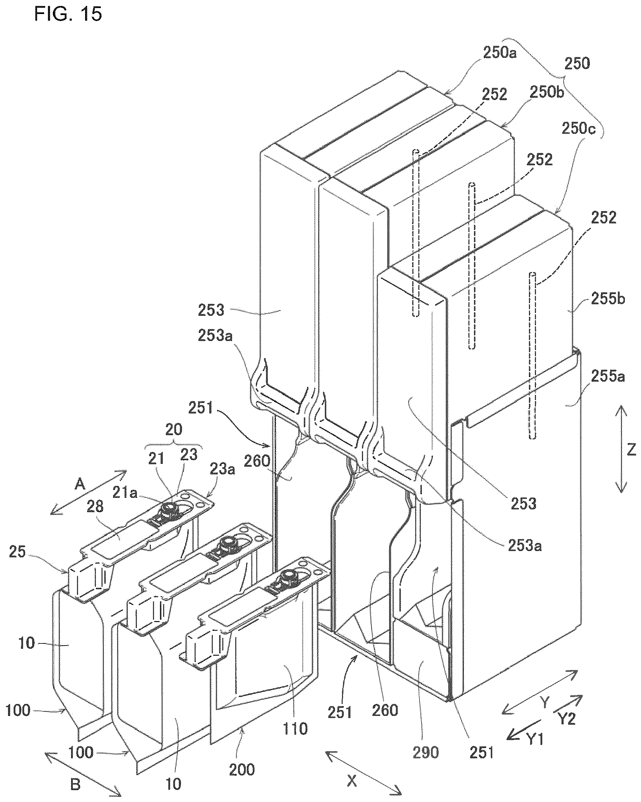

As illustrated in FIG. 15, the reagent aspirator 250 includes a plurality of reagent container holders that can each hold one reagent container 100 (or 200). The reagent aspirator 250 includes, for example, a total of five reagent container holders; however, in FIG. 15, only three reagent container holders 250a, 250b and 250c are illustrated for convenience. The plurality of reagent container holders 250a to 250c are provided side by side in the horizontal direction.

In the reagent container holders 250a, 250b and 250c, the reagent container 100 (or 200) storing different types of reagents (stains) for measuring multiple measurement items are installed. The reagent containers are divided into a large (about 300 mL) reagent container 100 and a small (about 30 mL) reagent container 200, depending on the type of reagent; however, each reagent container holder 250a to 250c is installed with a predetermined type of reagent container. In FIG. 15, the large reagent containers 100 are installed in reagent container holders 250a and 250b. The small reagent container 200 is installed in the reagent container holder 250c.

Each reagent container holders 250a to 250c includes a lower chassis 255a and an upper chassis 255b, a container holder 251, an aspiration tube 252, an operator 253, and a movement mechanism 254 (see FIG. 22). The structure of the reagent container holder 250a is described below, representing reagent container holders 250a to 250c.

### <Container holder>

The container holder 251 is provided in the lower chassis 255a. The container holder 251 is located at the lowest part of the reagent container holder 250a. The container holder 251 is configured to hold the reagent container 100 that includes the bag-shaped reagent storage 10 storing a reagent and the frame 20 including the opening 21a.

The container holder 251 includes a storage 260 that can store the reagent container 100 inside and has a box shape or tubular shape with an inlet formed in the horizontal direction. The storage 260 has an inlet opening at an end in a Y1 direction and is provided so as to extend from the inlet toward a Y2 direction.

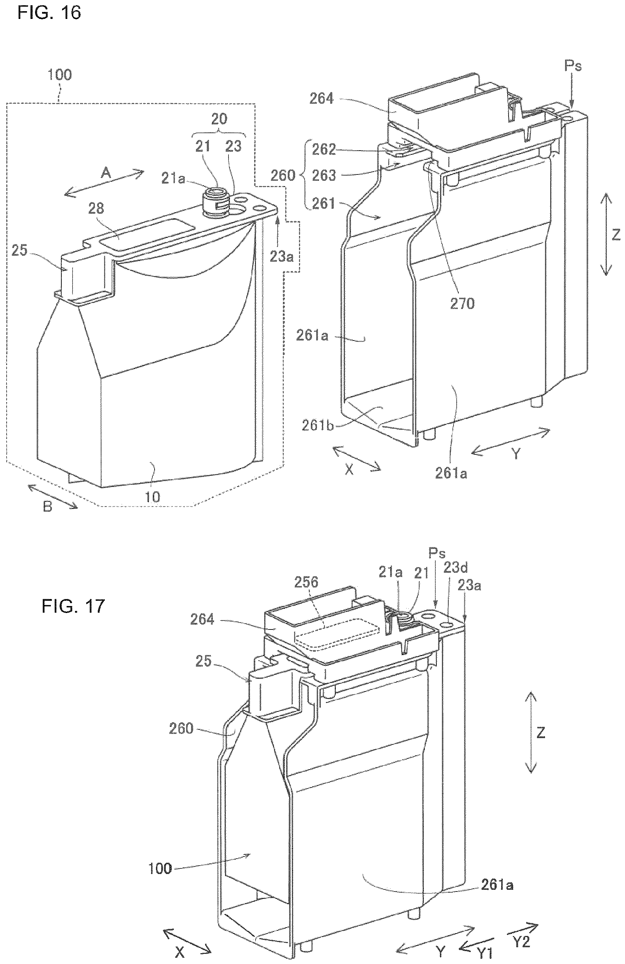

As illustrated in FIG. 16, the storage 260 includes a first insertion portion 261, into which the reagent storage 10 of the reagent container 100 is inserted, and a second insertion portion 262 that is provided above the first insertion portion 261 and into which the movement control member 23 of the reagent container 100 is inserted.

The first insertion portion 261 is a space demarcated by a pair of side sections 261a facing both sides of the reagent storage 10 and the width direction (X direction) and a bottom section 261b facing the bottom of the reagent storage 10 and the vertical direction (Z direction). The upper part of the first insertion portion 261 and the second insertion portion 262 are connected by a connection passage 263.

The connection passage 263 is a space for passing a connecting section (a section where the mounting member 22 is disposed) between the movement control member 23 and the reagent storage 10 of the reagent container 100 in the Y direction.

The second insertion portion 262 is configured to extend from the inlet of the storage 260 toward the set position Ps immediately below the aspiration tube 252 and contact the movement control member 23 to guide the reagent container 100 to the set position Ps (see FIG. 17). Thereby, the movement control member 23 can be used to guide the reagent container 100 from the inlet of the storage 260 to the set position Ps. As a result, even with the reagent container 100 that includes the reagent storage 10, which is easily deformed, the user can accurately guide the reagent container 100 to the set position Ps with a simple operation only to insert the reagent container 100 from the inlet of the storage 260.

As illustrated in FIG. 18, the second insertion portion 262 includes a convex cross-sectional shape. In other words, the second insertion portion 262 has a convex cross-sectional shape with a wide lower part into which the flat plate-shaped movement control member 23 is inserted and a narrow upper part into which the opening portion 21 protruding above the movement control member 23 is inserted.

### <Contacting part>

The reagent aspirator 250 (see FIG. 15) includes a contacting part 270 (see FIG. 18). The contacting part 270 illustrated in FIG. 18 contacts the movement control member 23 (see FIG.19) that is provided on the frame 20 of the reagent container 100 provided in the container holder 251 and regulates the movement of the opening 21a. Thereby, the contacting part 270 contacting the movement control member 23 can prevent misalignment between the aspiration tube 252 and the opening 21a when inserting the aspiration tube 252. Also, since misalignment between the aspiration tube 252 and the opening 21a can be suppressed with the aspiration tube 252 being inserted into the interior of the reagent storage 10 from the opening 21a, the sealed state of the interior of the reagent storage 10 can be effectively maintained.

The contacting part 270 is configured to regulate the movement of the opening 21a by contacting the movement control member 23 fixed to the opening 21a of the reagent container 100. As a result, the relative position of the movement control member 23 and the opening 21a is fixed, so that positioning and movement control of the opening 21a can be carried out reliably and accurately by bringing the contacting part 270 into contact with the movement control member 23.

At least a part of the contacting part 270 is provided in the storage 260 (see FIG. 16). Thereby, by inserting the reagent container 100 into the interior of the storage 260 from the inlet, the contacting part 270 and the movement control member 23 are contacted, and the movement of the opening 21a in the storage 260 can be controlled.

Specifically, the contacting part 270 (see FIG. 18) is provided in the second insertion portion 262. Thereby, by providing the contacting part 270 in the second insertion portion 262 corresponding to the movement control member 23 of the reagent container 100, the contacting part 270 and the movement control member 23 can be brought into contact in a predetermined relative positional relationship even with the reagent container 100 including the reagent storage 10 that is easily deformed. As a result, positioning and movement control of the opening 21a can be performed accurately.

### <Position control in the horizontal direction>

As illustrated in FIG. 18 and FIG. 19, the contacting part 270 is configured to restrict the horizontal movement of the opening 21a by contacting the movement control member 23 in the horizontal direction. Thereby, the positional relationship in the horizontal direction between the opening 21a and the aspiration tube 252 can be restrained from shifting by the contacting part 270.

The contacting part 270 includes an inner surface of the container holder 251 and is configured to face the movement control member 23 in each of the first direction A and the second direction B, which are mutually orthogonal in the horizontal plane. Thereby, the misalignment of the opening 21a in both the first direction A and the second direction B can be suppressed by allowing the movement control member 23 to be in contact with the inner surface of the container holder 251. In addition, when the distance between the movement control member 23 and the contacting part 270 (inner surface of the container holder 251) is set within an allowable range of misalignment, the operation to install the reagent container 100 can be done easily by allowing slight misalignment while preventing misalignment of the opening 21a beyond the allowable range.

The contacting part 270 is configured to come into contact with either a hole formed in the movement control member 23, a notch formed in the movement control member 23, or a side surface of the movement control member 23. This allows the contacting part 270 to be in contact with the movement control member 23 in a simple configuration, and movement of the opening 21a in the horizonal direction can be effectively regulated.

Specifically, as illustrated in FIG. 20, the contacting part 270 includes a first contacting surface 271 that is in contact with a side surface of the movement control member 23 in the first direction A in the horizontal plane. The first contacting surface 271 is an inner wall of the Y1 direction side edge of the storage 260 (see FIG. 16). When the reagent container 100 is inserted in the Y2 direction from the inlet of the storage 260 to the interior of the storage 260, a first surface 24a of the movement control member 23 contacts the first contacting surface 271. A position at which the first surface 24a of the movement control member 23 contacts the first contacting surface 271 is the set position Ps of the reagent container 100 (200). As a result, by simply placing the side surface of the movement control member 23 against the inner surface of the container holder 251, both alignment and movement control of the opening 21a in the first direction A can be easily achieved.

The contacting part 270 includes a second contacting surface 272 that is in contact with a side surface of the movement control member 23 in the second direction B, which is orthogonal to the first direction A in the horizontal plane. Specifically, as illustrated in FIG. 18, on both sides of the second insertion portion 262 in the X direction, a pair of grooves 262a that is depressed in the X direction to respectively receive both ends of the second direction B of the movement control member 23 is provided. The second contacting surface 272 is the inner surface of the pair of grooves 262a. As illustrated in FIG. 19, when the movement control member 23 is inserted into the second insertion portion 262, both ends of the movement control member 23 in the X direction (second direction B) are respectively provided inside the grooves 262a. Thereby, the pair of second contacting surfaces 272 contact the pair of second surfaces 24b, 24c of the movement control member 23 in the second direction B. When the movement control member 23 moves in the width direction, the movement of the movement control member 23 is controlled by contacting one of the pair of second contacting surfaces 272. Therefore, both alignment and movement control of the opening 21a in the second direction B can be easily achieved by the side surface of the movement control member 23.

The distance between the pair of second contacting surfaces 272 is slightly larger than the distance between the pair of second surfaces 24b, 24c of the movement control member 23 (i.e., the width of the movement control member 23 in the second direction B). The pair of second contacting surfaces 272 is provided so as to restrict movement of the movement control member 23 in the X direction within an allowable range.

Furthermore, as illustrated in FIG. 20, the contacting part 270 includes a third contacting surface 273a that contacts a notch formed on the side surface of the movement control member 23. Thereby, the notch formed on the side surface of the movement control member 23 and the third contacting surface 273a can be brought into contact with each other. The contact can effectively suppress the shifting of the position of the opening 21a.

The third contacting surface 273a of the contacting part 270 is biased to be movable toward the inside of the second insertion portion 262, and is configured to come into contact with the movement control member 23 inside the second insertion portion 262 when the reagent container 100 is placed in the set position Ps. Specifically, the second insertion portion 262 is provided with a protruding member 273 that projects to advance and retract from the second contact surface 272 in the X direction toward the inside of the second contact surface 272 of the second insertion portion 262. The protruding member 273 is provided one on each side of the second insertion portion 262 in the X direction. Each protruding member 273 comprises a V-shaped leaf spring, and protrudes from a space 262b to the interior of the second insertion portion 262 via a gap 272a formed in each of the pair of second contacting surfaces 272. The surfaces of these protruding members 273 are the third contacting surfaces 273a.

As illustrated in FIG. 21A, when the movement control member 23 is inserted into the interior of the second insertion portion 262, a third contacting surface 273a of each protruding member 273 contacts a pair of second surfaces 24b, 24c, and is pushed back toward the outside of the second insertion portion 262 in the X direction. The third contact surface 273a of each protruding member 273 biases the movement control member 23 in the X direction toward the center of the second insertion portion 262 by the elastic force of the leaf spring. As illustrated in FIG. 20B, when the reagent container 100 is placed in the set position Ps, notches 23c formed in the second surfaces 24b, 24c of the movement control member 23 reach a position of each protruding member 273. Thereby, according to the indentation of the notch 23c, the third contacting surface 273a of each protruding member 273 advances into the inside of the notch 23c by the elastic force F of the leaf spring. As a result, the third contacting surface 273a contacts a third surface 24d comprising the inner surface of the notch 23c. The movement of the movement control member 23 is restricted in the Y direction by the contact of the third contacting surface 273a and the third surface 24d unless an external force overcoming the elastic force F of the protruding member 273 is applied.

The contact between the contacting part 270 (third contacting surface 273a) and the movement control member 23 can hold the movement control member 23 so that the opening 21a of the reagent container 100 does not move from the set position Ps. In addition, when the reagent container 100 is inserted into the storage, the movement control member 23 does not move at the set position Ps, so that the user can perceive by feel that the reagent container 100 is placed in the proper position without visually contacting the position of the reagent container 100. In addition, since the movement control member 23 is subjected to the elastic force F from both sides in the X direction by each protruding member 273, the movement control member 23 is positioned in the center of the second insertion portion 262 in the X direction.

### <Position control in the vertical direction>

The contacting part 270 is configured to control the vertical movement of the opening 21a by contacting the movement control member 23 in the vertical direction. As a result, even with the reagent container 100 that includes a bag-shaped reagent storage 10, which is easily deformed, the opening 21a can be restrained from moving in the vertical direction when inserting the aspiration tube 252 into the interior of the reagent storage 10 and when pulling the aspiration tube 252 out of the reagent storage 10.

Specifically, as illustrated in FIG. 18, the contacting part 270 includes an upper side contacting surface 274 and a lower side contacting surface 275. The upper side contacting surface 274 and the lower side contacting surface 275 are configured to be in contact with an upper surface 23f and a lower surface 23g of the movement control member 23, respectively (see FIG. 19). The upper side contacting surface 274 comprises an upper surface of the groove 262a. The lower side contacting surface 275 comprises a lower surface of the groove 262a. Accordingly, the upper side contacting surface 274 and the lower side contacting surface 275 are provided in pairs, one on each side of the second insertion portion 262 in the X direction.

The lower side contacting surface 275 is in contact with the lower surface 23g at both ends of the second direction B of the movement control portion 23 and determines a position of the movement control member 23 in the vertical direction. The lower side contacting surface 275 and the upper side contacting surface 274 face each other in the Z direction with an interval that is larger than the thickness of the movement control member 23 by a predetermined allowable range. Therefore, the upper side contacting surface 274 is usually non-contacting and vertically opposite the upper surface 23f at both ends of the second direction B of the movement control member 23. The upper side contacting surface 274 is in contact with the upper surface 23f of the movement control member 23 when the movement control member 23 is lifted in the upward direction and control the movement of the movement control member 23 so that the movement control member 23 does not move upwardly beyond a predetermined allowable range. As a result, the movement of the opening 21a in the vertical direction can be controlled by a simple configuration.

In this way, the contacting part 270 is provided in each of the upward direction and downward direction to face the movement control member 23. As a result, the contacting part 270 is in contact with the upper surface 23f and the lower surface 23g of the movement control member 23, thereby the movement of the opening 21a in both the upward direction and downward direction is regulated. Also, when the distance between the movement control member 23 and the contacting part 270 is set within an allowable range of misalignment, the operation to install the reagent container 100 can be done easily by allowing slight movement while preventing movement of the opening 21a beyond the allowable range.

When the movement control member 23 is inserted into the second insertion portion 262, the lower side contacting surface 275 contacts the lower surface 23g of the movement control member 23 and supports the movement control member 23. In other words, the container holder 251 supports the reagent container 100 in a suspended manner by supporting both ends of the movement control member 23 in the second direction B with the lower side contacting surfaces 275 on both sides in the X direction, respectively. Since the reagent storage 10 (110) is deformable, a bottom section 261b of the first insertion portion 261 (see FIG. 22) does not contribute much to the support of the reagent container 100. In other words, the container holder 251 includes a pair of grooves 262a into which both ends of the movement control member 23 in the second direction B are inserted respectively, and the entire reagent container 100 is supported via the movement control member 23 by the pair of grooves 262a.

### <Reader>

As illustrated in FIG. 17, the container holder 251 includes a reader 256 that obtains information about a reagent from the information storage medium 28 provided in the reagent container 100 provided in the storage 260. Thereby, when the reagent container 100 is installed in the analyzer 300, the information on the reagent can be read from the information storage medium 28.

Each reader 256 is provided at the top of each storage 260 of the plurality of reagent container holders 250a. Thereby, the reagent information can be read individually from each reagent container 100 installed in the multiple storages 260.

Specifically, as illustrated in FIG. 22, the reader 256 is provided to cover the upper part of the second insertion portion 262 above the second insertion portion 262 of the storage 260. The reader 256 is configured with a RIFD reader that communicates wirelessly with the information storage medium 28, which consists of an RFID tag, and reads information from the information storage medium 28.

As illustrated in FIG. 17, the reader 256 is provided in a space enclosed by a peripheral wall 264 at the upper part of the second insertion portion 262. The reader 256 has a flat plate shape extending along the Y direction. Also, the reader 256 is provided at a position facing the information storage medium 28 provided on the upper surface of the movement control member 23 in the vertical direction (Z direction) when the reagent container 100 is placed in the set position Ps. Thereby, the reader 256 reads the reagent information by non-contact wireless communication from the information storage medium 28 provided directly below the reader 256. The space between the reader 256 provided in any one reagent container holder (e.g., reagent container holder 250b) and the information storage medium 28 in the reagent container 100 installed in that one reagent container holder 250b and the adjacent reagent container holders 250a and 250c is interrupted by the peripheral wall 264 surrounding the reader 256 and the lower chassis 255a. Therefore, interference with the information storage medium 28 of the reagent container 100 installed in the adjacent reagent container holder is prevented.

The reagent information includes various information such as a type of reagent, lot number, storage period, etc. The analyzing device 203 (see FIG. 13), via the measurement controller 210, obtains the reagent information read from the information storage medium 28 by the reader 256, and executes a process based on the obtained reagent information. The analyzing device 203, for example, manages the storage period of a reagent.

### <Aspiration tube and movement mechanism>

As illustrated in FIG. 22, the aspiration tube 252 is provided above an innermost part (side end of the Y2 direction) of the storage 260 of the container holder 251, with the tip facing downward. The aspiration tube 252 is configured to be held by the movement mechanism 254 and be moved in the vertical direction (Z direction) by the movement mechanism 254. Thereby, the aspiration tube 252 is configured to enter the interior of the reagent storage 10 (110) through the opening 21a of the reagent container 100 (200) inserted at the back of the container holder 251, and to be able to aspirate a reagent inside the reagent container 100 (200).

The aspiration tube 252 includes the seal 252a that seals the opening 21a by the aspiration tube 252 being inserted into the opening 21a and contacting the opening 21a. Thereby, the seal 252a can easily and effectively seal the reagent storage 10.

The seal 252a is provided to surround the periphery of the aspiration tube 252 and is configured to elastically deform and seal the opening 21a by contacting the edge of the opening 21a (i.e., the sealing surface 21b of the opening portion 21). Thereby, using the downward movement of the aspiration tube 252 when inserting the aspiration tube 252 into the opening 21a, the seal 252a can securely seal the reagent storage 10.

The seal 252a is made of an elastically deformable rubber material. The seal 252a comprises a non-permeable solid material. The seal 252a has no vent holes that allow the opening 21a to be connected to the outside when the opening 21a is sealed. In addition, a biasing member 252b is provided between the seal 252a and the aspiration tube holder 254a that holds the aspiration tube 252 for applying a force to the seal 252a toward the opening 21a. The biasing member 252b comprises a compression spring.

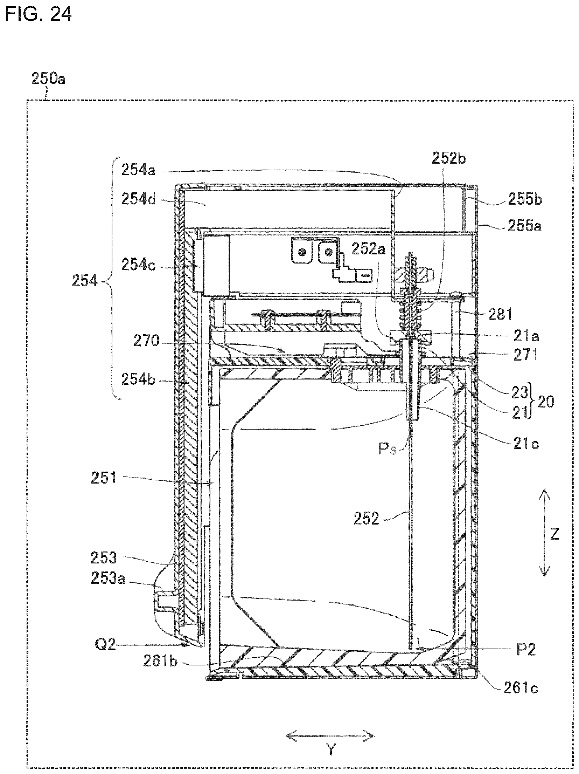

The movement mechanism 254 holds the aspiration tube 252 movably in the vertical direction (Z direction) between an upward position P1 and a downward position P2 (see FIG. 24). The movement mechanism 254 includes an aspiration tube holder 254a and a linear movement mechanism consisting of a linear rail 254b and a fixed slider 254c. The aspiration tube 252 is attached to the aspiration tube holder 254a, and the aspiration tube holder 254a is connected to the upper end of the linear rail 254b via a connector 254d that extends in the Y direction. The linear rail 254b is provided on the front side of the reagent container holder 250a (side of a Y1 direction) and extends in the Z direction. The fixed slider 254c is fixed to the lower chassis 255a and holds the linear rail 254b movably along the Z direction. This allows the linear rail 254b to move with respect to the fixed slider 254c in the Z direction. As the linear rail 254b moves in the Z direction, the aspiration tube 252 moves integrally with the linear rail 254b in the Z direction.

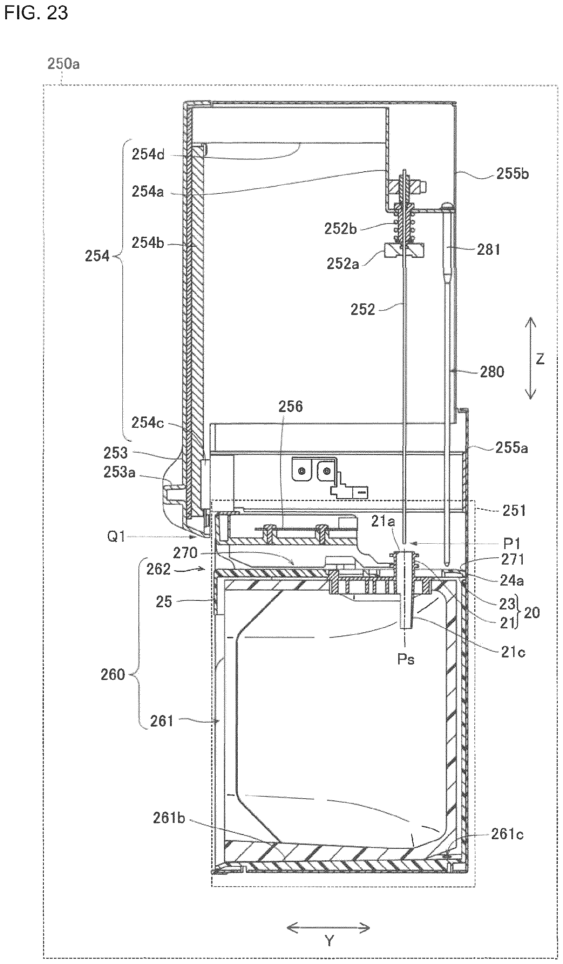

As illustrated in FIG. 23, the upward position P1 is a position in which the entire aspiration tube 252 is evacuated above the reagent container 100 placed in the set position Ps. In the upward position P1, the reagent container 100 (200) can be removed from the reagent container holder 250a (reagent container holder 250b, reagent container holder 250c) or the reagent container 100 (200) can be installed in the reagent container holder 250a (reagent container holder 250b, reagent container holder 250c).

As illustrated in FIG. 24, the downward position P2 is the position in which the aspiration tube 252 is inserted into the interior of the reagent storage 10 (110) via the opening 21a of the reagent container 100 (200). In the downward position P2, the tip of the aspiration tube 252 is provided in the vicinity of an inner bottom directly below the opening 21a in the reagent storage 10 (110).

In this way, the movement mechanism 254 is configured to support the aspiration tube 252 to be able to move in the vertical direction and to move the aspiration tube 252 into the reagent container 100 held in the container holder 251 and out of the reagent container 100 by moving the aspiration tube 252 in conjunction with a predetermined operation on the operator 253. Thereby, simply by moving the aspiration tube 252 in vertical direction such as up and down, the aspiration tube 252 can be entered into the reagent container 100 and exited out of the reagent container 100. The fewer degrees of freedom in the direction of movement of the aspiration tube 252, the more accurately and with higher repeatability the aspiration tube 252 can be operated, so that a simple vertical movement allows for a more precise operation of sealing the reagent storage 10 when the aspiration tube 252 is inserted.

As illustrated in FIG. 22, the movement mechanism 254 supports an operator 253 so that the aspiration tube 252 and the operator 253 move in conjunction with each other. The operator 253 is provided on the front side of the reagent container holder 250a (side of the Y1 direction), and the back side (Y2 direction side) of the operator 253 is attached to the linear rail 254b. As a result, the linear rail 254b, the aspiration tube 252 and the operator 253 move integrally in the Z direction.

### <Operator>

As illustrated in FIG. 15, the operator 253 is provided on the front side (arrow Y1 direction side) of each of the reagent container holders 250a to 250c (lower chassis 255a). The operator 253 is configured as a cover that opens and closes the front surface of the container holder 251 of the reagent container holder 250a.

As illustrated in FIG. 22, the operator 253 is configured to be movable to an unloading position Q1 that allows removal of the reagent container 100 from the container holder 251 and an unloading prevention position Q2 that prevents removal of the reagent container 100 from the container holder 251. In other words, the operator 253 is configured to be movable by the movement mechanism 254 to the unloading position Q1 (see FIG. 22 and FIG. 23), which opens the container holder 251, and to the unloading prevention position Q2 (see FIG. 24), which covers (closes) the container holder 251. The unloading position Q1 is an upward position of the operator 253 when the aspiration tube 252 is in the upward position P1. The unloading prevention position Q2 is a downward position of the operator 253 when the aspiration tube 252 is in the downward position P2.

The operator 253 is configured to be held and moved by a user. The operator 253 is formed with an operation holder 253a that protrudes forward (Y1 direction) from the front surface of the operator 253. By holding the operation holder 253a and moving the operation holder 253a in the Z direction, the user can move the operator 253 in the Z direction.

The movement mechanism 254 inserts the aspiration tube 252 into the opening 21a in conjunction with an operation to move the operator 253 to the unloading prevention position Q2 (see FIG. 24). The movement mechanism 254 evacuates the aspiration tube 252 out of the reagent container 100 in conjunction with an operation to move the operator 253 to the unloading position Q1 (see FIG. 23).

Therefore, the aspiration tube 252 can be automatically evacuated out of the reagent container 100 by simply moving the operator 253 to the unloading position Q1 in order to remove the reagent container 100, and the aspiration tube 252 can be automatically inserted into the opening 21a by simply moving the operator 253 to the unloading prevention position Q2 after installing the reagent container 100.

In case that the reagent container 100 does not reach the set position Ps (in case that the reagent container 100 is provided on the Y1 direction side from the set position Ps), the grip 25 of the movement control member 23 is provided from the storage 260 to a position directly below the operator 253. Therefore, when the user does not insert the reagent container 100 correctly to the set position Ps and tries to move the operator 253 in the downward direction, the grip 25 comes into contact with the operator 253, thereby the movement of the operator 253 in the downward direction is prohibited.

### <Contacting part>

In the present embodiment, in addition to the contacting part 270 provided inside the container holder 251, a contacting part 280 is provided outside the container holder 251. The contacting part 280 is configured to contact the movement control member 23 of the reagent container 100 and secure the opening 21a at least when the aspiration tube 252 is inserted into the opening 21a. As a result, the reagent container 100 can be prevented from moving unintentionally with the aspiration tube 252 inserted into the opening 21a. Therefore, the reagent container 100 can be prevented from being unsealed or from spilling a reagent from the reagent storage 10 due to misalignment of the opening 21a.

The contacting part 280 includes an entry member 281 that enters into a concave part formed in the movement control member 23 of the reagent container 100 in conjunction with the movement of the aspiration tube 252 by the movement mechanism 254. As illustrated in FIG. 22, the aspiration tube holder 254a of the movement mechanism 254 is provided with an entry member 281 with a column shape extending in the Z direction in addition to the aspiration tube 252. Therefore, the entry member 281 moves in the Z direction integrally with the aspiration tube 252, the aspiration tube holder 254a, the connector 254d and the linear rail 254b. When the reagent container 100 is placed in the set position Ps (i.e., when the opening 21a is placed directly below the aspiration tube 252), the entry member 281 locates directly above the hole 23d formed in the movement control member 23. The concave part that is formed in the movement control member 23 refers to the hole 23d.

When the aspiration tube 252 is in the upward position P1, the entry member 281 is provided at a position retracted above the hole 23d (see FIG. 6) in the movement control member 23, and is non-contact with the reagent container 100. At the upward position P1, the distance between the tip of the entry member 281 and the movement control member 23 is smaller than the distance between the aspiration tube 252 and the opening 21a.

When the aspiration tube 252 moves downward, the entry member 281 also moves downward together with the aspiration tube 252 and enters inside the hole 23d (see FIG. 6) of the movement control member 23. As a result, as illustrated in FIG. 25, the outer circumference of the entry member 281 and a fourth surface 24e comprising the inner surface of the hole 23d are in contact. The tip of the entry member 281 first enters the interior of the hole 23d, and then the tip of the aspiration tube 252 is inserted into the opening 21a. Therefore, at the timing at which the tip of the aspiration tube 252 is inserted into the opening 21a, the entry member 281 is in contact with the movement control member 23. Thereby, even when, at the timing at which the aspiration tube 252 is inserted into the opening 21a, an external force acts on the movement control member 23 to cause misalignment for some reason, such as the aspiration tube 252 contacting the inner surface of the opening 21a, the entry member 281 inserted inside the hole 23d restricts the movement of the movement control member 23.

As illustrated in FIG. 24, when the aspiration tube 252 is in the downward position P2, the entry member 281 passes through the hole 23d of the movement control member 23, and the tip of the entry member 281 is inserted into a fixed hole 261c that is formed in the bottom section 261b of the container holder 251. In this state, the upper end of the entry member 281 is held in the aspiration tube holder 254a, and the lower end (tip) of the entry member 281 contacts the storage 260, so that both ends of the entry member 281 are firmly held not to move. Thereby, while the aspiration tube 252 is in the downward position P2, the movement control member 23, which is in contact with the entry member 281 in the hole 23d, is unable to move in the horizontal direction. As a result, the opening 21a can be securely fixed by contacting the contacting part 280 (entry member 281) with the hole 23d formed in the movement control member 23.

### (Difference between reagent container holders)

The structure of the reagent container holder 250a, in which the large reagent container 100 is installed, is described above. As illustrated in FIG. 15, the reagent container holder 250b has the same structure as the reagent container holder 250a, since the large reagent container 100 is installed in the same way as the reagent container holder 250a. The reagent container holder 250c, in which the small reagent container 200 is installed, is structurally different from the reagent container holders 250a and 250b in order to accommodate the small reagent container 200.

Specifically, since the height (vertical dimension) of the small reagent container 200 is smaller than that of the large reagent container 100, the reagent container holder 250c includes a spacer 290 to raise a bottom position of the reagent container holder 251. The reagent container holder 250c is configured so that a height position of the opening 21a of the reagent container 200 is equal to the height position of the opening 21a of the reagent container 100 that is installed in the reagent container holder 250a (250b) by the spacer 290. For this reason, an insertion height of the large reagent container 100 in reagent container holders 250a and 250b and the insertion height of the small reagent container 200 in reagent container holder 250c are at the same height position. Specifically, the height position of the movement control member 23 (height position of the second insertion portion 262) of the reagent container 100 in the reagent container holders 250a, 250b and the height position of the movement control member 23 (height position of the second insertion portion 262) of the reagent container 200 in the reagent container holder 250c are the same. This allows the user to align the insertion heights of the reagent containers 100, 200 when installing each reagent container 100, 200, thereby facilitating the installation work.

Also, in the reagent container holder 250c, the movement distance of the aspiration tube 252 between the upward position P1 and the downward position P2 is set to be short to suit the small reagent containers 200, which has a smaller height. Reflecting this shorter movement distance, the vertical dimension of the reagent container holder 250c is shorter than the vertical dimension of the reagent container holder 250a (250b).

The other structure of the reagent container holder 250c is the same as that of the reagent container holder 250a (250b).

### (Installation of the reagent container)

Next, an installation operation of the reagent container 100 in the reagent container holder 250a of the measurement unit 201 is described. Since the installation operation is the same for the reagent containers 100 and 200, only the installation operation of the reagent container 100 is described, and the installation operation of the reagent container 200 is omitted. Similarly, only the installation operation of the reagent container 100 in the reagent container holder 250a is described here, and the installation operations of the other reagent container holders 250b and 200c are omitted.

First, the user opens the front cover 206a (see FIG. 12), holds the operation holder 253a of the reagent container holder 250a to move the operator 253 to the unloading position A1 (see FIG. 22), and opens the inlet of the container holder 251. The aspiration tube 252 is provided in the upward position P1 as the operator 253 is provided in the unloading position Q1.

Next, as illustrated in FIG. 23, the user inserts the reagent container 100 into the storage 260 of the container holder 251. As illustrated in FIG. 16, the user holds the grip 25 of the movement control member 23 and inserts one end 23a of the movement control member 23 in the first direction A into the second insertion portion 262 of the storage 260 in the Y2 direction. At this time, the guiding portions 23e (see FIG. 6), which are both ends of the movement control member 23 in the second direction B, are provided in the pair of grooves 262a of the second insertion portion 262; therefore, the movement control member 23 is guided to move in the Y direction within the second insertion portion 262. As the movement control member 23 moves in the Y2 direction within the second insertion portion 262, the reagent storage 10 enters the first insertion portion 261 in the Y2 direction.

As illustrated in FIG. 21, when the movement control member 23 reaches the installation position of the protruding member 273, the second surfaces 24b, 24c on both sides of the movement control member 23 push back each third contact surface 273a of the pair of protruding members 273 outward in the X direction, respectively. Since the movement control member 23 is biased from both sides by the pair of protruding members 273, the center position of the movement control member 23 is aligned with the center of the second insertion portion 262 in the X direction.

As illustrated in FIG. 20, by the first surface 24a on the one end 23a of the movement control member 23 contacting the first contacting surface 271, the reagent container 100 is provided in the set position Ps where the opening 21a is provided directly below the aspiration tube 252. At this time, each third contacting surface 273a of the pair of protruding members 273 of the second insertion portion 262 is in contact with the third surface 24d in the notches 23c on both sides of the movement control member 23; therefore, the movement of the movement control member 23 in the Y direction is restricted.

As illustrated in FIG. 19, at both ends of the movement control member 23 in the second direction B, the lower surface 23g of the movement control member 23 is supported by the lower side contacting surface 275 of the second insertion portion 262. Therefore, the entire reagent container 100 is supported by the pair of lower side contacting surfaces 275. At both ends of the movement control member 23 in the second direction B, the upper surface 23f of the movement control member 23 faces the upper side contacting surface 274, the upward movement of the movement control member 23 beyond the allowable range is restricted.

Then, as illustrated in FIG. 23 and FIG. 24, the user moves the operator 253 of the reagent container holder 250a downward from the unloading position Q1 to the unloading prevention position Q2. As a result, the aspiration tube 252 and the entry member 281 move downward. First, the entry member 281 is inserted into the hole 23d (see FIG. 25) of the movement control member 23, and then the aspiration tube 252 is inserted into the opening 21a. The aspiration tube guiding portion 21c is provided below the opening 21a in the reagent storage 10; therefore, even when the angle of entry of the aspiration tube 252 is slightly tilted with respect to the central axis of the opening 21a, the tip of the aspiration tube 252 is guided by the aspiration tube guiding portion 21c toward the inner bottom of the reagent storage 10 without contacting the inner surface of the reagent storage 10.

As illustrated in FIG. 26A, in the process of the downward movement of the aspiration tube 252, the seal 252a provided in the aspiration tube 252 contacts the sealing surface 21b of the opening 21a from above. After the aspiration tube 252 is moved downward by the movement mechanism 254 and the seal 252a contacts the sealing surface 21b of the opening 21a, the aspiration tube 252 is moved further downward to the predetermined downward position P2. The aspiration tube 252 moves downwardly while compressing the biasing member 252b. FIG. 26A illustrates the state of the seal 252a just before the seal 252a contacts the sealing surface 21b of the opening 21a.

As illustrated in FIG. 24, when the operator 253 moves to the unloading prevention position Q2, the tip of the aspiration tube 252 at the downward position P2 is provided near the inner bottom of the reagent storage 10.

As illustrated in FIG. 26B, in the downward position P2, the biasing member 252b is compressed so that the biasing member 252b biases the seal 252a toward the opening 21a. As a result, the seal 252a adheres to the sealing surface 21b of the opening 21a while the seal 252a is elastically deformed, and the opening 21a is securely sealed by the seal 252a. The positionings of the opening 21a in the horizontal direction and the vertical direction are made by the contact between the movement control member 23 and the contacting part 270, and the seal 252a is biased against the edge of the opening 21a by the biasing member 252b; therefore, the opening 21a is securely sealed by the seal 252a.

In addition, when the operator 253 moves to the unloading prevention position Q2, the entry member 281 is brought into contact with inside of the fixed hole 261c (see FIG. 24) of the storage 260, so that the misalignment of the opening 21a is restrained via the entry member 281 and the movement control member 23, which are in contact with each other. The operator 253 is provided in front of the inlet (Y1 direction side) of the storage 260 with the reagent container 100 being stored in the unloading prevention position Q2, and covers the inlet of the storage 260. This prevents the user from accidentally pulling the reagent container 100 out of the storage 260.

Thus, the operation of installing the reagent container 100 in the reagent container holder 250a is completed.

### (Replacement of the reagent container)

Next, an operation of replacing the reagent container 100 is described. Since the replacement operation is the same for reagent containers 100 and 200, only the replacement operation of the reagent container 100 is described, and the replacement operation of the reagent container 200 is omitted. Similarly, only the replacement operation of the reagent container 100 in the reagent container holder 250a is described here, and the replacement operation of the reagent container 100 in other reagent container holders 250b and 250c is omitted.

First, the user opens the front cover 206a (see FIG. 12), holds the operation holder 253a of the operator 253 to move the operator 253 to the unloading position Q1 (see FIG. 23), and then opens the inlet of the container holder 251. As illustrated in FIG. 23, the aspiration tube 252 is pulled out of the opening 21a and provided in the upward position P1 above the container holder 251 as the operator 253 is provided in the unloading position Q1. Also, the entry member 281 retreats above the hole 23d in the movement control member 23.

Next, the user removes the reagent container 100 provided in the set position Ps from inside the storage 260. As illustrated in FIG. 17, the user holds the grip 25 of the movement control member 23 and pulls out the movement control member 23 in the Y1 direction. Since the movement control member 23 is in the state to be in contact with the protruding member 273 at the portion of the notch 23c (see FIG. 20), the user pulls the movement control member 23 in the Y1 direction against the elastic force of the protruding member 273. As a result, the contact between the notch 23c and the protruding member 273 is released.

By the user continuing the operation of pulling out the movement control member 23 in the Y1 direction, the movement control member 23 is removed from the second insertion portion 262 in the Y1 direction, and the reagent storage 10 is removed from the first insertion portion 261 in the Y1 direction.

Then, the user executes an installation operation to set the new reagent container 100 in the container holder 251. The details of the installation operation are as described above. In this manner, the aspiration tube 252, the seal 252a and the entry member 281 move up in vertical direction in conjunction with the operator 253; therefore, by simply lifting the operator 253, the user can evacuate the aspiration tube 252, release the seal by the seal 252a, and release the contact between the entry member 281 and the movement control member 23 with a single action (one action).

### (Operation of the analyzer)

Next, with reference to FIG. 13 and FIG. 14, the measurement processing operation of the analyzer 300 of a first embodiment is described. A component to be analyzed is measured in the same manner in the first measurement unit 201a and the second measurement unit 201b, respectively; therefore, the following only describes a case in which the component to be analyzed is measured by the second measurement unit 201b, and the description of the measurement processing operation of the first measurement unit 201a is omitted. The control of the measurement processing operation of the second measurement unit 201b is performed by the measurement controller 210 based on the control of the analyzing device 203. Only the FCM measurement section 241 is described here, and descriptions of other measurement methods are omitted.

First, as illustrated in FIG. 13, after a bar code is read at a reading position 4c, the sample container 1 transported to a taking position 4a is taken into the inside of the second measurement unit 201b by the container movement mechanism 211. From the sample container 1 transported by the container movement mechanism 211 to an aspiration position 4d, as illustrated in FIG. 14, a sample is aspirated by the sample aspirator 220, and each sample that is quantified is supplied to the reaction chamber 231 of the specimen preparing unit 230. Then, a measurement specimen is prepared from the aspirated sample by the specimen preparing unit 230.

Specifically, by operations of the metering section 232 and the electromagnetic valve 233a (233b), the reagent stored in each reagent container 100 (or 200) set in the reagent aspirator 250 is supplied to the predetermined reaction chamber 231 corresponding to the measurement items, respectively. Furthermore, by operations of the metering section 234 and the electromagnetic valve 235a (235b), the reagent (hemolytic agent) stored in the external large volume reagent container 3 is supplied to the predetermined reaction chamber 231. Then, a measurement specimen is prepared after the sample and the reagent are mixed in the reaction chamber 231 and through the reaction process.

Next, a component to be analyzed is detected from the measurement specimen by the detector 240. The measurement specimen that is prepared using the reagent stored in the reagent container 100 (or 200) described above is supplied to the FCM measurement section 241 of the detector 240, and various measurement items are measured by the flow cytometric method. After the measurement is completed, the measured measurement specimen in the reaction chamber 231 is discarded in a waste chamber 246 via the electromagnetic valve 245. Then, the measurement data is transmitted from the measurement controller 210 of the second measurement unit 201b to the analyzing device 203.

Thereafter, based on a measurement result transmitted from the second measurement unit 201b, the component to be analyzed is analyzed by the controller 203a. Thereby, the analysis of the sample is completed, and the operation is terminated.

### [Second embodiment of the reagent container]

A reagent container 100 according to a second embodiment of the present invention is, as illustrated in FIG. 1, FIG. 2, FIGS. 22 to 24 and FIG. 26, the reagent container 100 to store a reagent to be aspirated by the aspiration tube 252 provided in the analyzer 300, and includes the reagent storage 10 to store a reagent and the frame 20 that includes the opening 21a and is provided in the reagent storage 10. The frame 20, as illustrated in FIG. 23, FIG. 24 and FIG. 26, is configured so that the opening 21a is blocked by the seal 252a that moves together with the aspiration tube 252 when the aspiration tube 252 is inserted from above in conjunction with a predetermined operation to the analyzer 300.

Therefore, the user does not need to perform an operation to insert the aspiration tube 252 into the opening 21a of the reagent container 100 prior to installation of the reagent container 100 so that the reagent container 100 can be easily installed in the analyzer 300. Also, since the opening 21a is sealed by the seal 252a that moves with the aspiration tube 252, the reagent in the reagent storage 10 is prevented from contacting the outside air. Therefore, deterioration of the reagent after installation in the analyzer 300 can be suppressed.

### [Third embodiment of the reagent container]

A reagent container 100 according to a third embodiment of the present invention is, as illustrated in FIG. 1, FIG. 2, FIGS. 22 to 24 and FIG. 26, is the reagent container 100 that stores a reagent aspirated by the aspiration tube 252, which is provided in the analyzer 300 to be movable vertically, and includes the reagent storage 10 to store a reagent, the mounting member 22 that is provided in the reagent storage 10 and includes the opening 21a, and the movement control member 23 attached to the mounting member 22. As illustrated in FIG. 19 and FIG. 20, the movement control member 23 is configured to provide the opening 21a directly under the aspiration tube 252 (set position Ps, see FIG. 23) and support the reagent storage 10 via the mounting member 22 by contacting a part of the analyzer 300 (see FIG. 20)

In the reagent container 100 according to a third embodiment, the movement control member 23 (see FIG. 19 and FIG. 20) is in contact with a part of the analyzer 300 to provide the opening 21a directly under the aspiration tube 252 and support the reagent storage 10 via the mounting member 22. Therefore, when the reagent container 100 is installed in the analyzer 300, as illustrated in FIG. 23 to FIG. 24, the aspiration tube 252 can be inserted into the opening 21a simply by bringing the movement control member 23 into contact with the contacting part 270 of the analyzer 300 and then moving the aspiration tube 252 downward. Therefore, the user does not need to perform an operation to insert the aspiration tube 252 into the opening 21a of the reagent container 100 prior to installation of the reagent container 100 so that the reagent container 100 can be easily installed in the analyzer 300.

### [Reagent container kit]

Next, referring to FIG. 27, a reagent container kit 450 of the present embodiment is described. The reagent container kit 450 is a reagent container kit to assemble the reagent container 100 that stores a reagent to be repeatedly aspirated with the aspiration tube 252 inserted in the analyzer 300.

The reagent container kit 450 includes the bag-shaped reagent storage 10 that stores a reagent and the frame 20 that includes the opening 21a and is attachable to the reagent storage 10. The reagent container kit 450 is provided to the user in a state, in which the container body 451 that comprises the reagent storage 10 and the mounting member 22 attached to the reagent storage 10 and the movement control member 23 are separated. By the user attaching the movement control member 23 to the opening portion 21 and the supported portion 22a of the mounting member 22, the reagent container 100 is assembled.

As described above, the frame 20 is configured so that the interior of the reagent storage 10 is sealed when the aspiration tube 252 is inserted from above in conjunction with a predetermined operation on the analyzer 300 while attached to the reagent storage 10.

Therefore, according to the reagent container kit 450 of the present embodiment, the user does not need to perform an operation to insert the aspiration tube 252 into the opening 21a of the reagent container 100 prior to installation of the reagent container 100 so that the reagent container 100 can be easily installed in the analyzer 300. Also, since the interior of the reagent storage 10 is sealed when the aspiration tube 252 is inserted, the reagent in the reagent storage 10 is prevented from contacting the outside air. Therefore, deterioration of the reagent after installation in the analyzer 300 can be suppressed.

### [Method of assembling the reagent container]

A method of assembling the reagent container 100 from the reagent container kit 450 of this embodiment is described. As illustrated in FIG. 27, the method of assembling the reagent container 100 of this embodiment is a method of assembling the reagent container 100 that includes the movement control member 23, which restricts the movement of the opening 21a so that the interior of the reagent storage 10 is sealed when the aspiration tube 252 is inserted into the reagent storage 10 from above in conjunction with a predetermined operation on the analyzer 300 by bringing the container body 452 that includes the reagent storage 10 to store a reagent and the mounting member 22, which includes the opening 21a and is provided in the reagent storage 10, into contact with a part of the analyzer 300.

In the method of assembling the reagent container 100 of the embodiment, first, the movement control member 23 is provided on the mounting member 22 of the reagent container 100. Specifically, the connecting sections (fixing portion 26, supporting portion 27) of the movement control member 23 are provided directly above the mounting portions (opening portion 21, supported portion 22a) of the mounting member 22. Then, the movement control member 23 is provided on the mounting member 22 so that the opening portion 21 and the supported portion 22a are provided inside the through hole 26a of the fixing portion 26 and inside the first through hole 27a of the supporting portion 27, respectively.

Second, the mounting member 22 and the movement control member 23 are engaged with each other by moving the movement control member 23 relative to the mounting member 22. In other words, the movement control member 23 is moved to the one end 23a side of the first direction A in a state, in which the opening portion 21 is provided inside the through hole 26a of the fixing portion 26, and the supported portion 22a is provided inside the first through hole 27a of the supporting portion 27. Thereby, the fixing portion 26 is engaged with the opening portion 21 by the neck 21d of the opening portion 21 being sandwiched between the pair of engaging pieces 26b. Also, the supported portion 22a is engaged with the supporting portion 27 by the supported portion 22a moving from the first through hole 27a to the second through section 27b. As a result, the reagent container 100 is assembled.

When the assembled reagent container 100 is installed in the analyzer 300, the movement control member 23 contacts a part of the analyzer 300 to regulate the movement of the opening 21a so that the interior of the reagent storage 10 is sealed when the aspiration tube 252 is inserted into the reagent storage 10 from above in conjunction with a predetermined operation on the analyzer 300. Therefore, the user does not need to perform an operation to insert the aspiration tube 252 into the opening 21a of the reagent container 100 prior to installation of the reagent container 100 so that the reagent container 100 can be easily installed in the analyzer 300. Also, since the interior of the reagent storage 10 is sealed when the aspiration tube 252 is inserted, the reagent in the reagent storage 10 is prevented from contacting the outside air. Therefore, deterioration of the reagent after installation in the analyzer 300 can be suppressed.

### [Container body]

As illustrated in FIG. 27, the reagent container 100 of the present embodiment includes the container body 451 that includes the reagent storage 10 to store a reagent and the mounting member 22, which includes the opening 21a and is provided in the reagent storage 10. The mounting member 22 includes mounting portions (opening portion 21, supported portion 22a) to which the frame 20 is attached, wherein the frame 20 controls the movement of the opening 21a so that the interior of the reagent storage 10 is sealed when the aspiration tube 252 is inserted from above in conjunction with a predetermined operation on the analyzer 300.

Therefore, when the frame 20 is attached to the mounting member 22 and the reagent container 100 is installed in the analyzer 300, the aspiration tube 252 can be inserted in conjunction with a predetermined operation on the analyzer 300. Therefore, the user does not need to perform an operation to insert the aspiration tube 252 into the opening 21a of the reagent container 100 prior to installation of the reagent container 100 so that the reagent container 100 can be easily installed in the analyzer 300. Also, since the interior of the reagent storage 10 is sealed when the aspiration tube 252 is inserted, the reagent in the reagent storage 10 is prevented from contacting the outside air. Therefore, deterioration of the reagent after installation in the analyzer 300 can be suppressed.

Moreover, in the present embodiment, the mounting member 22 includes a plurality of mounting portions (opening portion 21, supported portion 22a) spaced from each other. Thereby, when the reagent container 100 is carried, the reagent storage 10 is supported so as to be suspended from the frame 20 at the plurality of points of the opening portion 21 and the supported portion 22a. Since the weight of the reagent storage 10 is distributed and acts on the multiple points of the movement control member 23, the reagent storage 10 can be stably supported even if the capacity of the reagent storage 10 is increased.

### [Frame]

The frame 20 of the present embodiment, as illustrated in FIG. 3 and FIG. 27, is the frame 20 that is attached to the reagent container 100, which stores a reagent to be aspirated by the aspiration tube 252 provided in the analyzer 300, and includes the movement control member 23 that includes connection sections (fixing portion 26 and supporting portion 27), which are connected to the reagent container 100 provided with the opening 21a. As illustrated in FIGS. 18 to 20 and FIGS. 23 to 24, the movement control member 23 is in contact with a part of the analyzer 300 (contacting part 270) to control the movement of the opening 21a so that the interior of the reagent container 100 is sealed when the aspiration tube 252 is inserted into the reagent container 100 from above in conjunction with a predetermined operation on the analyzer 300.

Therefore, as illustrated in FIGS. 22 to 23, the user does not need to perform an operation to insert the aspiration tube 252 into the opening 21a of the reagent container 100 prior to installation of the reagent container 100 so that the reagent container 100 can be easily installed in the analyzer 300. Also, as illustrated in FIG. 24, since the interior of the reagent storage 10 is sealed when the aspiration tube 252 is inserted, the reagent in the reagent storage 10 is prevented from contacting the outside air. Therefore, deterioration of the reagent after installation in the analyzer 300 can be suppressed.

### (Other embodiments of the reagent container)

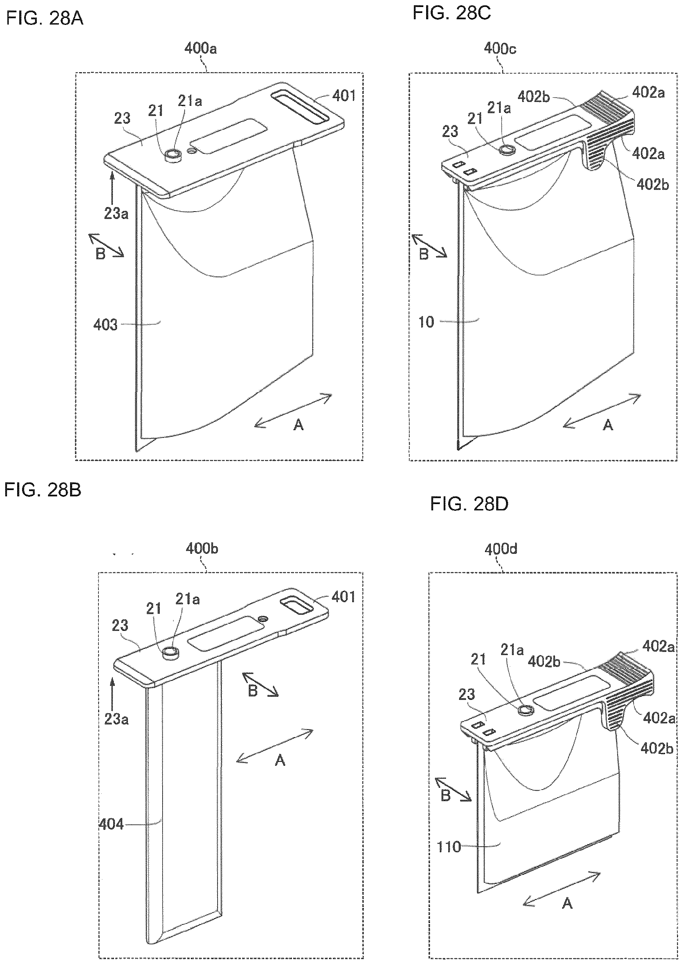

In the present invention, the reagent container may be provided with various configurations, for example, as illustrated in FIG. 28.

FIGS. 28A to 28D illustrates various variations of the reagent container. In a reagent container 400a of FIG. 28A, the width of the movement control member 23 is larger than the width of the reagent container 100 of FIG. 2. The hole 23d that engages with the entry member 281 is not provided near the one end 23a of the movement control member 23. In each of the reagent containers 400a to 400d of FIGS. 28A to 28D, compared to the reagent container 100 in FIG. 2, the opening portion 21 protrudes less from the movement control member 23. The movement control member 23 is fixed to the opening portion 21 by inserting the opening portion 21 into a hole formed in the movement control member 23 from below.

In the reagent container 400a of FIG. 28A and a reagent container 400b of FIG. 28B, the holder 401 has a flat plate shape extending along the horizontal direction. In a reagent container 400c of FIG. 28C and a reagent container 400d of FIG. 28( D), a holder 402a extending in the horizontal direction is provided, and the holder 402a can be gripped so as to pinch the holder 402a from above and below, and a pair of holders 402b extending in the vertical direction is provided on both sides of the movement control member 23, and the holder 401b can be gripped so as to pinch the holder 402b from right and left.

As illustrated in FIGS. 28A to 28D, the movement control member 23 is not limited to the shapes illustrated in FIG. 2 and FIG. 3. The shape of the movement control member 23 is not limited to a plate shape, but may be a rod shape, a tubular shape, etc. The movement control member 23 may not have a constant width. The movement control member 23 may not have a constant thickness. The movement control member 23 may be shaped such that one or both of the thickness and the width vary along the first direction A. The movement control member 23 may be shaped such that one or both of the thickness and the width vary along the second direction B. The longitudinal direction of the movement control member 23 and the longitudinal direction of the reagent storage 10 (110, 403, 404) may be different. In the movement control member 23, the one end 23a in the first direction A and the other end 23b may have the same shape or different shapes. Each side surface of the movement control member 23 may not be formed in a straight line. Each side surface of the movement control member 23 may be formed in a curved shape or may be bent. In the movement control member 23, the grip 25 (401, 402a, 402b) may not be provided.

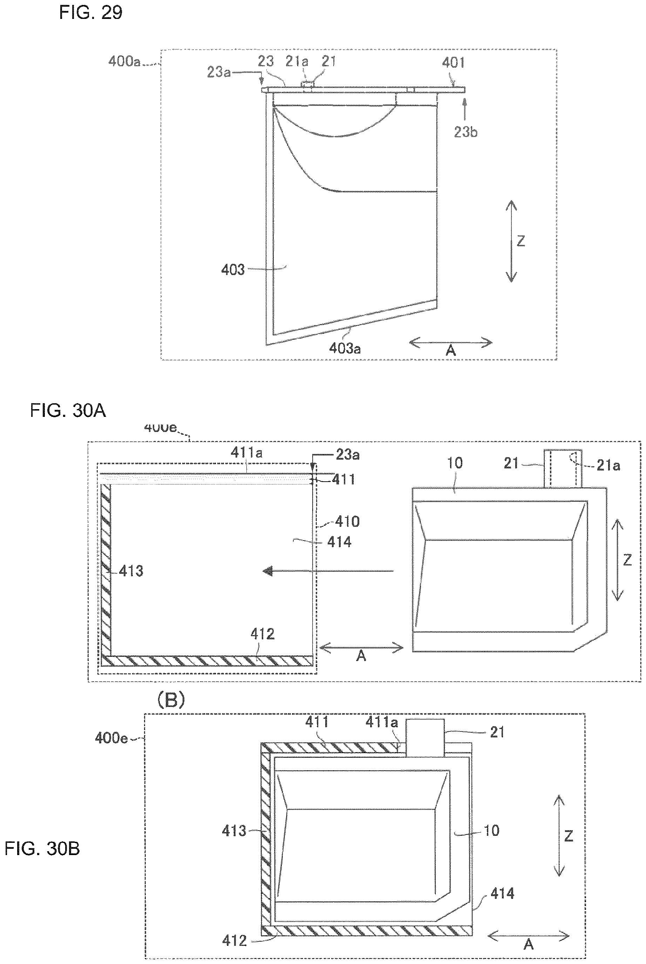

The reagent container 400b of FIG. 28B is provided with a vertical reagent storage 404, which has a small length in the first direction A and extends in the vertical direction. As illustrated in FIG. 29, in the reagent container 400a, a lower end 403a of a reagent storage 403 is provided to slope downward from the other end 23b side toward the first end 23a side of the first direction A. For this reason, the inner bottom surface of the reagent storage 403 is also provided to slope downward from the other end 23b side to the first end 23a side of the first direction A, so that a reagent easily collects at a position directly below the opening 21a where the aspiration tube 252 is inserted. Therefore, the dead volume of a reagent can be reduced.

In a reagent container 400e illustrated in FIG. 30A and B, a movement control member 410 includes a fixing portion 411a that is fixed to the opening portion 21, and a bottom supporting member 412 that supports a bottom of the reagent storage 10. This allows the movement control member 410 and the opening 21a to be fixed in a relative position. Further, the movement control member 410 supports the bottom of the reagent storage 10, preventing deformation of the bag-shaped reagent storage 10, which is easily deformed, and allowing the user to easily handle the reagent container 100.

The movement control member 410 includes a flat plate section 411 that includes a fixing portion 411a, a bottom supporting member 412, and a connecting section 413 that connects the flat plate section 411 and the bottom supporting member 412. The flat plate section 411 extends horizontally along the top of the reagent storage 10, the bottom supporting member 412 extends horizontally along the bottom of the reagent storage 10, and the connecting section 413 extends vertically along an end surface of the other end 23b side of the reagent storage 10. The movement control member 410 has a box shape with one side released. The one end 23a side in the first direction A of the movement control member 410 is open and serves as an inlet to insert the reagent storage 10. When the reagent storage 10 is provided inside the movement control member 410, the reagent storage 10 is surrounded by the flat plate section 411, the bottom supporting member 412, the connecting section 413, and a side section 414 of the movement control member 410, except on the one end 23a side, which is the inlet

### (Other embodiments of sealing structure of the reagent storage)

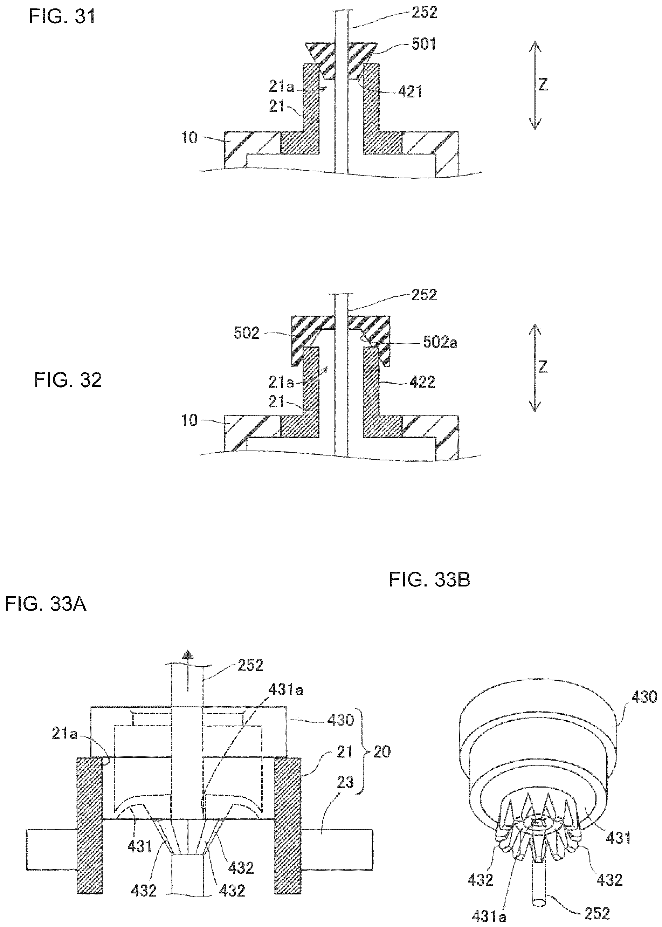

FIG. 26 illustrates an example, in which the seal 252a contacts the sealing surface 21b comprising the upper surface of the opening portion 21 to seal the opening portion 21, but FIG. 31 and FIG. 32 illustrate an example, in which the position of the sealing surface 21b is different.

In FIG. 31, a seal 501 provided in the aspiration tube 252 has a shape that tapers downwardly. The overall width (diameter) of the lower end of the seal 501 is smaller than the diameter of the opening 21a. The overall width (diameter) of the upper end of the seal 501 is larger than the diameter of the opening 21a. The outer circumference between the lower end and the upper end of the seal 501 is an inclined surface.

Therefore, when the aspiration tube 252 is inserted into the reagent storage 10 via the opening 21a, the lower end of the seal 501 enters the interior of the opening 21a, and a sloping surface between the lower end and the upper end of the seal 501 fits into and adheres to the inner circumferential surface of the opening portion 21 to seal the opening 21a. In this configuration, the opening portion 21 includes a sealing surface 421 comprising an inner circumferential surface of the opening portion 21.

In FIG. 32, a seal 502 provided in the aspiration tube 252 includes a concave section 502a, in which the opening portion 21 is fitted on the lower surface side. The concave section 502a opens at the lower surface of the seal 502 and is formed to taper upwardly. An inner diameter at the low end of the concave section 502a is larger than an outer diameter of the opening portion 21. The inner diameter of the upper end of the concave section 502a is smaller than the outer diameter of the opening portion 21. The inner circumference between the lower end and the upper end of the concave section 502a is an inclined surface. The upper end of the concave section 502a does not reach the upper surface of the seal 502, and the concave section 502a is a non-through depression.

As a result, when the aspiration tube 252 is inserted into the reagent storage 10 via the opening 21a, the opening portion 21 enters into the interior of the concave section 502a of the seal 502, and the outer circumference of the opening portion 21 fits against and adheres to the sloping surface between the lower end and upper end of the concave section 502a to seal the opening 21a. In this configuration, the opening portion 21 includes a sealing surface 422 comprising an outer circumferential surface of the opening portion 21.

### <Example of a reagent container with a sealing portion>

FIG. 31 and FIG. 32 illustrate an example of sealing the opening 21a by the seals 501 and 502 provided in the aspiration tube 252, but FIG. 33 illustrates an example of a structure to seal the opening 21a is provided in the reagent container 100.

The frame 20 of the reagent container 100 covers the opening 21a and includes a sealing portion 430, which is elastically deformable. The sealing portion 430 is a cap that fits into the opening 21a formed in the opening portion 21 of the frame 20. The sealing portion 430 is formed of an elastically deformable rubber material such as silicon rubber, etc.

The sealing portion 430 is configured to deform with insertion of the aspiration tube 252 to seal the gap between the aspiration tube 252 and the opening 21a. Specifically, the sealing portion 430 has a membrane section 431 that covers the opening 21a, and a through hole 431a, through which the aspiration tube 252 passes, is provided in the center of the membranous section 431. On a lower surface of the membrane section 431, a plurality of downwardly projecting contact sections 432 are provided in a circular line around the through hole 431a.

As illustrated in FIG. 33B, when the aspiration tube 252 is inserted into the through hole 431a, the membrane section 431, which is pulled by friction with the aspiration tube 252, is elastically deformed convex downward, and the distance between the tips of the plurality of contact sections 432 provided on the lower surface of the membrane section 431 is widened.

As illustrated in FIG. 33A, on the other hand, when the aspiration tube 252 moves upward from the through hole 431a, the membrane section 431 is elastically deformed convex upward, the distance between the tips of the plurality of contact sections 432 provided on the lower surface of the membrane section 431 becomes smaller, and the plurality of contact sections 432 adhere to the outer circumferential surface of the aspiration tube 252. As a result, the outer circumferential surface of the aspiration tube 252 adheres to each contact section 432 over the entire circumference of the aspiration tube 252, the gap between the aspiration tube 252 and the sealing portion 430 is sealed.

The aspiration tube 252 is configured to apply an upward biasing force on the sealing portion 430 to the extent that the sealing condition is maintained by the plurality of contact sections 432 while being inserted into the reagent storage 10 of the reagent storage 10. In this configuration, the seal 252a is not provided in the aspiration tube 252. As a result, even without the seal 252a in the aspiration tube 252, a structure in which the opening 21a is sealed by elastic deformation of the sealing portion 430 in the reagent container 100 can be realized.

### (Other embodiments of the analyzer)

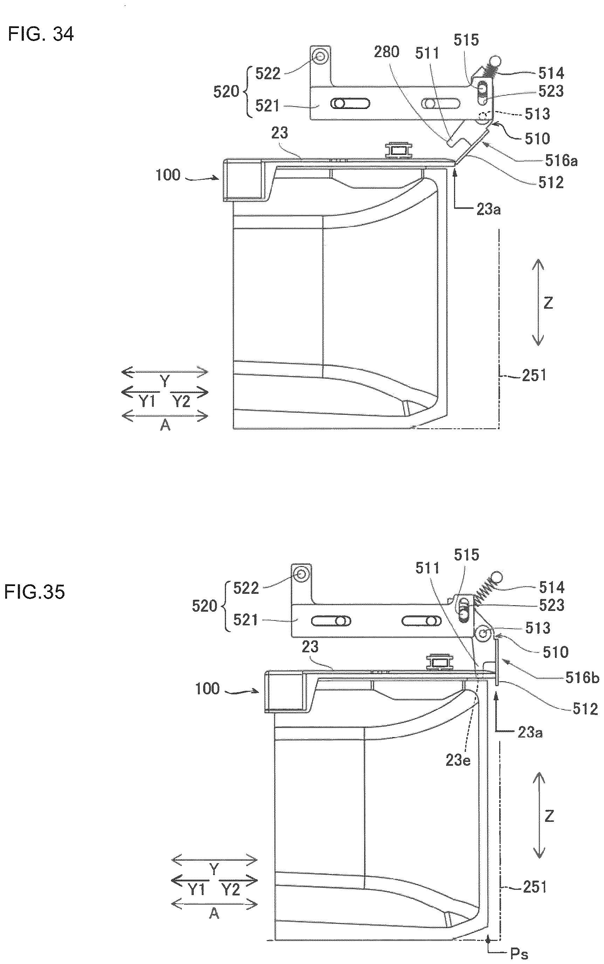

In the present invention, the analyzer 300 may be configured as illustrated in FIGS. 34 to 39, for example.

### (Other examples of the entry member)

FIG. 22 illustrates an example, in which the contacting part 280 of the analyzer 300 includes the entry member 281 that enters into a concave section formed in the movement control member 23 of the reagent container 100 in conjunction with the movement of the aspiration tube 252 by the movement mechanism 254; however, in FIG. 34 and FIG. 35, the contacting part 280 of the analyzer 300 includes an entry member 511 that enters into a concave section formed in the movement control member 23 of the reagent container 100 in conjunction with the placement of the reagent container 100 in the container holder 251.

In FIG. 34, the entry member 511 is provided on a movable member 510, on which a contact piece 512 is formed. The movable member 510 is provided in the lower chassis 255a (see FIG. 15), supported rotatably by a rotation shaft 513, and is biased toward a disengaged position 516a illustrated in FIG. 34 by a biasing member 514. In the disengaged position 516a, the entry member 511 is retracted above the movement control member 23 of the reagent container 100.

When the reagent container 100 is moved toward the set position Ps of the reagent container 100, the one end 23a of the movement control member 23 of the reagent container 100 is in contact with the contact piece 512. While the reagent container 100 reaches the set position Ps, the movement control member 23 moves the contact piece 512 against the biasing force of the biasing member 514 so as to push the contact piece 512 away. Pushing the contact piece 512 causes the movable member 510 to rotate around the rotation shaft 513 from the disengaged position 516a to an engaged position 516b (see FIG. 35). As the movable member 510 rotates, the entry member 511 moves into the hole 23d in the movement control member 23 (see FIG. 6).

As a result, as illustrated in FIG. 35, when the reagent container 100 is placed in the set position Ps, the movable member 510 is placed in the engaged position 516b, the entry member 511 contacts the inner surface of the hole 23d, and the entry member 511 and the movement control member 23 are engaged. Thereby, by the engagement of the entry member 511 with the movement control member 23, the position of the opening 21a can be fixed in advance before the aspiration tube 252 is moved.

In the examples of FIG. 34 and FIG. 35, furthermore, the analyzer 300 is provided with a switching mechanism 520 that switches between a state, in which movement of the aspiration tube 252 by the movement mechanism 254 is permitted, and a state, in which movement of the aspiration tube 252 by the movement mechanism 254 is prohibited, in conjunction with the engagement of the entry member 511 with the movement control member 23.

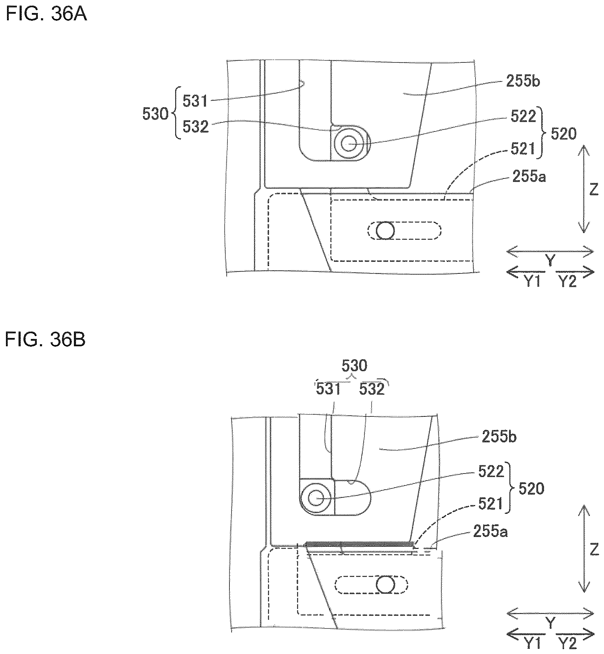

The switching mechanism 520 includes a movement member 521 that is movable reciprocally in the Y direction and an engagement pin 522 that is provided on the movement member 521. The movement member 521 includes an engagement hole to engage with an engagement shaft 515 provided in the movable member 510. The engagement hole 523 is a long hole extending in the Z direction, and when the engagement shaft 515 moves in an arc shape as the movable member 510 rotates around the rotation shaft 513, the engagement shaft 515 moves the movement member 521 in the Y direction while the engagement shaft 515 changes its position in the Z direction within the engagement hole 523. In other words, the movement member 521 is a cam mechanism that converts the rotational motion of the movable member 510 into a reciprocating motion in the Y direction. The engagement pin 522 of the movement member 521 is provided in a guide groove 530 that is formed in the upper chassis 255b (see FIG. 36) attached to the movement mechanism 254 (linear rail 254b, see FIG. 22). The guide groove 530 illustrated in FIG. 36 includes a first portion 531 extending in the Z direction and a second portion 532 extending in the Y direction at a lower end of the first portion 531.

When the movable member 510 is in the disengaged position 516a (see FIG. 34), the engagement pin 522 of the movement member 521 is provided inside the second portion 532 of the guide groove 530 of FIG. 36A. When the engagement pin 522 is in the second portion 532 and the upper chassis 255b attempts to move downward, the inner surface of the second portion 532 contacts the engagement pin 522 and the upper chassis 255b cannot move downward. Therefore, the operator 253, the aspiration tube 252 and the upper chassis 255b, which move integrally with the linear rail 254b, are prohibited from moving from the upward position to the downward position. In other words, the user cannot move the operator 253 and the aspiration tube 252 downward until the reagent container 100 is properly placed in the set position Ps.

When the movable member 510 moves from the disengaged position 516a to the engaged position 516b (see FIG. 35), the movement member 521 moves in the Y1 direction and the engagement pin 522 moves from the second portion 532 to the lower end of the first portion 531 (see FIG. 36B). Since the first portion 531 extends in the Z direction, the upper chassis 255b is movable in the downward direction when the engagement pin 522 at the lower end of the first portion 531. Therefore, the operator 253, the aspiration tube 252 and the upper chassis 255b, which move integrally with the linear rail 254b, are allowed to move from the upward position to the downward position. In other words, when the reagent container 100 is properly placed in the set position Ps, the user is permitted to move the operator 253 and the aspiration tube 252 in the downward direction.

According to this configuration, in a state in which the reagent container 100 does not reach the set position Ps, the aspiration tube 252 cannot be moved downward, which prevents the user from accidentally moving the aspiration tube 252.

### (Sealing switching mechanism of the seal)

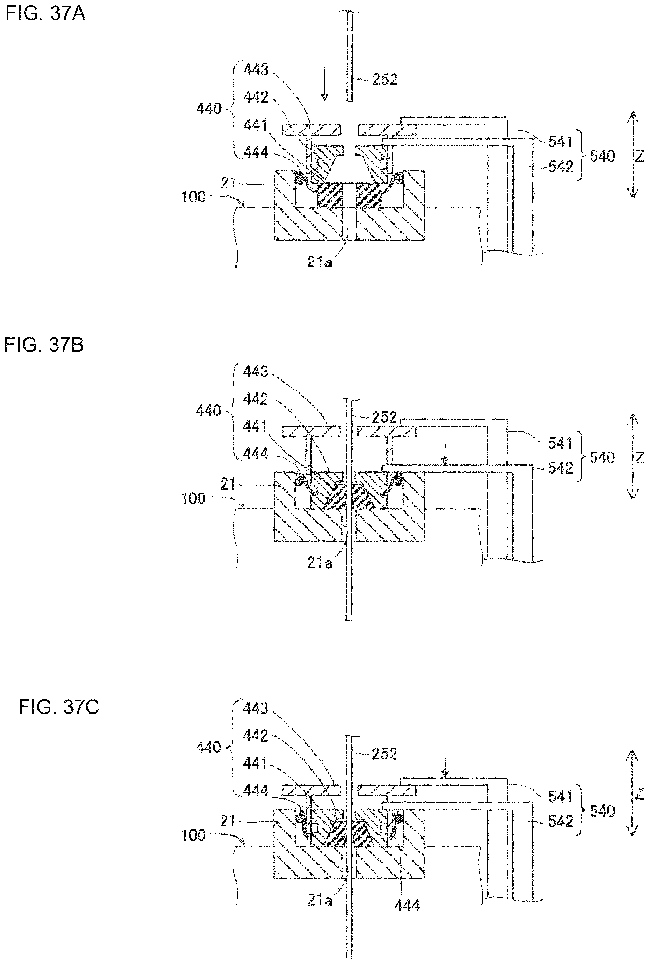

In the example illustrated in FIG. 23, the seal 252a is provided in the aspiration tube 252, so that the seal 252a seals or unseals the opening 21a by the aspiration tube 252 being moved in vertical direction. In contrast, in FIG. 37, the analyzer 300 includes the sealing switching mechanism 540 that operates the sealing portion 440 provided in the reagent container 100 to switch between sealing and unsealing the opening 21a.

As illustrated in FIG. 37A, the opening portion 21 of the reagent container 100 includes a packing 441 that covers the opening 21a, a caulking member 442 that is provided over the packing 441, and a disengagement member 443 that is provided over the caulking member 442. The opening portion 21 further includes a locking claw 444 that engages with an outer circumference of the caulking member 442. The packing 441, the caulking member 442, and the disengagement member 443 include insertion holes to insert the aspiration tube 252.

The sealing switching mechanism 540 includes a release section 541 that operates the disengagement member 443 and a sealing portion 542 that operates the caulking member 442. As illustrated in FIG. 37B, the aspiration tube 252 is inserted into the opening 21a from above the reagent container 100 through each insertion hole of the packing 441, the caulking member 442, and the disengagement member 443. After the aspiration tube 252 is inserted, the sealing switching mechanism 540 presses the caulking member 442 downward toward the packing 441 by the sealing portion 542. The caulking member 442 compresses and deforms the packing 441 inwardly toward the insertion hole by the pressure from the sealing portion 542. As a result, the packing 441 adheres tightly to the aspiration tube 252 in the insertion hole and seals the opening 21a. At this time, the locking claw 444 engages within a groove on the outer circumference of the caulking member 442, resisting the repulsive force of the packing 441 to maintain the sealed state by the caulking member 442.

When the aspiration tube 252 is pulled out from the reagent storage 10, as illustrated in FIG. 37C, the sealing switching mechanism 540 presses the disengagement member 443 downward toward the locking claw 444 by the release section 541. The disengagement member 443 pushes down the locking claw 444 to disengage the caulking member 442 and the locking claw 444. As a result, the packing 441, which is compressed and deformed, pushes the caulking member 442 upward and restores to the uncompressed state as illustrated in FIG. 37A. As a result, the state of adhesion between the aspiration tube 252 in the insertion hole and the packing 441 is released, thereby the sealing state of the opening 21a is released, and the aspiration tube 252 becomes movable.

### <Example of configurations of the operator and the movement mechanism>

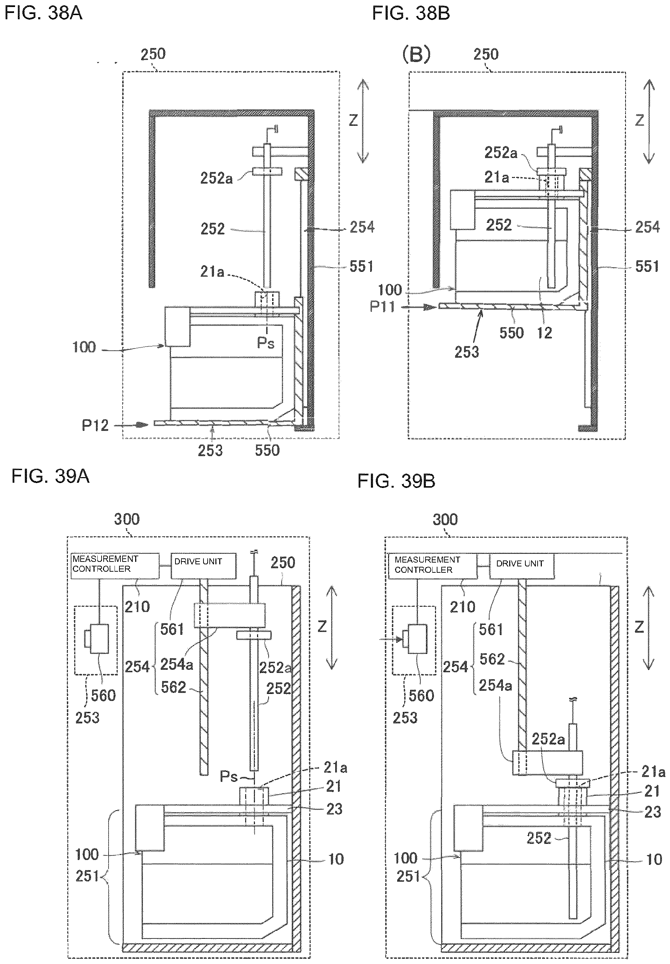

In the examples illustrated in FIG. 22 to FIG. 24, the movement mechanism 254 is configured to move the aspiration tube 252; however, in FIG. 38, the movement mechanism 254 moves a placing member 550, on which the reagent container 100 is placed, with respect to the aspiration tube 252.

The operator 253 includes the placing member 550, on which a bottom part of the reagent container 100 is placed. The movement mechanism 254 supports the placing member 550 in a movable manner. The movement mechanism 254 comprises a linear rail with which the placing member 550 is slidably engaged, and supports the placing member 550 to be movable in the Z direction between a downward position P12 illustrated in FIG. 38A and an upward position P11 illustrated in FIG. 38B. In FIG. 38, the aspiration tube 252 is fixed to a chassis 551 and does not move.

The movement mechanism 254 is configured to move the placing member 550 in conjunction with a predetermined operation on the placing member 550 to move the aspiration tube 252 into the reagent container 100 provided on the placing member 550 and to move the aspiration tube 252 out of the reagent container 100. In other words, as illustrated in FIG. 38A, after the user places the reagent container 100 at the set position Ps on the placing member 550 in the downward position P12, the user performs an operation to push the placing member 550 upward as illustrated in FIG. 38B. As a result, the reagent container 100 on the placing member 550 moves upward toward the aspiration tube 252, and the aspiration tube 252 is inserted into the opening 21a. At the upward position P11 illustrated in FIG. 38B, the opening 21a is sealed by the seal 252a.

In this way, instead of moving the aspiration tube 252, the aspiration tube 252 may be inserted into the reagent container 100 by moving the reagent container 100 toward the aspiration tube 252 by the placing member 550. Both the aspiration tube 252 and the placing member 550 may be moved.

Also, FIG. 22 to FIG. 24 illustrate an example, in which the operator 253 is configured as a cover for the reagent container holders 250a to 250c; however, as illustrated in FIG. 38, the operator 253 may be configured as the placing member 550 of the reagent container 100, other than a cover.

In addition, in FIG. 39, the operator 253 includes a switch 560 that accepts a predetermined operation. The switch 560 accepts an operation input and outputs a signal to operate the movement mechanism 254. The switch 560 may be a mechanical hardware switch or a switch displayed on the display 203b as a GUI (Graphical User Interface).

The movement mechanism 254 includes a drive unit 561 and a movement mechanism 562 that move the reagent container 100 and the aspiration tube 252 relative to each other in conjunction with a predetermined operation on the operator 253. The drive unit 561 is, for example, an electric motor. The movement mechanism 562 is a screw shaft that engages a nut part of the aspiration tube holder 254a and is rotated by the drive unit 561 to move the aspiration tube holder 254a and the aspiration tube 252 in vertical direction.

After the user places the reagent container 100 in the container holder 251, the user performs an input operation on the operator 253. When the operator 253 accepts the input operation, the operator 253 outputs a signal to the measurement controller 210. The measurement controller 210 operates the drive unit 561 in response to the signal from the operator 253. In FIG. 39B, the drive unit 561 moves the aspiration tube 252 downward to insert the aspiration tube 252 into the opening 21a. In this way, in response to the operation of the switch 560, the aspiration tube 252 may be moved by the drive unit 561.

### (Other examples of the analyzer)

In the present embodiment, an example in which the analyzer 300 is a blood cell counter is illustrated, but is not limited thereto. The analyzer 300 can be any apparatus that measures a sample using the reagent 12. The reagent 12 contains a component according to the principle of measurement of the sample by the analyzer 300 and is not limited to a staining solution.

### <Coagulation analyzer>

The analyzer 300 may be, for example, a coagulation analyzer that performs blood coagulation analysis. In this case, a sample is plasma or serum separated from blood. The detector 240 performs an optical measurement of a sample using a coagulation method, a synthetic substrate method, an immunonephelometry and/or an agglutination method. The analyzing device 203 analyzes the sample based on the detected light.

In the coagulation method, light is irradiated onto a measurement specimen, and based on an electrical signal of transmitted light or scattered light from the specimen, the coagulation time at which fibrinogen in the sample is converted to fibrin is measured. A coagulation reagent including a coagulation factor is used as the reagent 12. The measurement items of the coagulation method include PT (prothrombin time), APTT (activated partial thromboplastin time), Fbg (fibrinogen level), etc.

In the synthetic substrate method, light is irradiated onto a measurement specimen, and based on an electrical signal of transmitted light from the specimen, the degree of coloration due to an action of a chromogenic synthetic substrate on an enzyme in the measurement specimen is measured. The reagent 12 includes a chromogenic synthetic substrate. The measurement items of the synthetic substrate method include ATIII (antithrombin III), α2-PI (α2-plasmin inhibitor), PLG (plasminogen), etc.

In the immunonephelometry, an antibody sensitizing reagent that produces an antigen-antibody reaction against coagulation/fibrinolysis factors in a sample is added to the sample, and a substance included in the reagent 12 agglomerates as a result of the antigen-antibody reaction. The reagent 12 is an antibody sensitizing reagent. In the immunonephelometry, light is irradiated onto a measurement specimen, and based on an electrical signal of transmitted light or scattered light from the specimen, the aggregation speed of a reagent-containing substance in the measurement specimen is measured. The measurement items of the immunonephelometry include D-dimer, FDP (fibrin degradation product), etc.

In the agglutination method, light is irradiated onto a measurement specimen, and based on an electrical signal of transmitted light from the specimen, a change in absorbance during a process of an agglutination reaction of a platelet, etc. in the measurement specimen is measured. The reagent 12 includes a platelet aggregation reaction attractant or an immobilized platelet. The measurement items of the agglutination method include vWF: RCo (von Willebrand ristocetin cofactor), platelet aggregation capacity, etc.

### <Immune measuring apparatus>

Also, for example, the analyzer 300 may be an immune measuring apparatus. The analyzer 300 detects a target component using an antigen-antibody reaction between a target component in blood and a component in a reagent. For example, an antigen or antibody, protein, or peptide, etc. included in the blood is detected as the target component. The immune measuring apparatus obtains serum or plasma as a sample, and quantitatively measures or qualitatively measures the antigen or antibody included in the sample. The antigen-antibody reaction includes not only the reaction between antigen and antibody but also the reaction using a specific binding substance, such as an aptamer, etc. The aptamer is a nucleic acid molecule or peptide synthesized to bind specifically to a particular substance.

The detector 240 measures light generated from the specimen, i.e., chemiluminescence based on the substance to be tested included in the sample. The analyzing device 203 performs an analysis based on the light detected by the detector 240. The reagent 12 may include a reagent that includes a component, which specifically binds to the target component to form an immune complex, a reagent that includes a single component of the immune complex, a reagent that includes a labeled substance, an enzyme reagent to generate chemiluminescence, etc.

Here, chemiluminescence is light emitted using energy from a chemical reaction. For example, chemiluminescence is light emitted when a molecule is excited by a chemical reaction to an excited state and then returns from the excited state to the ground state. The chemiluminescence detected by the detector is, for example, based on chemiluminescence enzyme immunoassay (CLEIA), and is light produced by a reaction between an enzyme and a substrate. The measurement items of the chemiluminescence enzyme immunoassay include HBsAb, FT3, FT4, TSH, etc.

The chemiluminescence detected by the detector may be light based on chemiluminescent immunoassay (CLIA), electrochemiluminescence immunoassay (ECLIA), fluorescence enzyme immunoassay (FEIA), LOCI method (Luminescent Oxygen Channeling Immunoassay), BLEIA method (bioluminescent enzyme immunoassay), etc., for example.

The embodiments disclosed herein should be considered exemplary and not restrictive in all respects. The scope of the invention is indicated by the claims rather than by the description of the above-described embodiments, and further includes all modifications within the meaning and scope equivalent to the claims.

As a supplemental notes, a reagent container a reagent container kit, a method of installing a reagent container, a frame for a reagent container, a method of assembling a reagent container, and an analyzer according to one or more embodiments are summarized.

A reagent container for storing a reagent that is aspirated by an aspiration tube installed in an analyzer comprising:
a bag-shaped reagent storage for storing the reagent; and
a frame comprising an opening attached to the bag-shaped reagent storage, wherein
an interior of the bag-shaped reagent storage is sealed by inserting the aspiration tube from above in conjunction with a predetermined operation to the analyzer.

In the reagent container, the interior of the bag-shaped reagent storage is sealed by restricting inflow of air into the opening.

In the reagent container, the frame comprises:
an opening portion that comprises the opening; and
a movement control member that controls movement of the opening by contacting a part of the analyzer.

In the reagent container, the movement control member controls horizontal movement of the opening by contacting a part of the analyzer in a horizontal direction.

In the reagent container, the movement control member is formed to face an inner surface of a container holder of the analyzer in each of a first direction and a second direction that are mutually orthogonal in a horizontal plane.

In the reagent container, the movement control member comprises a horizontal contacting surface comprising one of: an inner surface of a hole formed in the movement control member; an inner surface of a notch formed in the movement control member; and a side surface of the movement control member.

In the reagent container, the movement control member comprises a shape extending along a first direction in the horizontal plane, and
the horizontal contacting surface comprises a first surface comprising the side surface formed at an end of the movement control member in the first direction.

In the reagent container, the movement control member comprises a shape extending along a first direction in the horizontal plane, and
the horizontal contacting surface comprises a second surface comprising the side surface extending along the first direction of the movement control member.

In the reagent container, the movement control member comprises a notch formed in the side surface, and the horizontal contacting surface comprises a third surface comprising an inner surface of the notch and contacting a part of the analyzer entering into the notch.

In the reagent container, the movement control member comprises a hole formed in a top surface, and the horizontal contacting surface comprises a fourth surface comprising an inner surface of the hole and contacting a part of the analyzer entering into an interior of the hole.

In the reagent container, the movement control member controls vertical movement of the opening by contacting a part of the analyzer in a vertical direction.

In the reagent container, the movement control member is formed to face an inner surface of a container holder of the analyzer in each of an upward direction and a downward direction.

In the reagent container, the movement control member comprises a top surface and a bottom surface vertically in contact with a part of the analyzer.

In the reagent container, the movement control member is fixed to the opening portion so as to project horizontally from the opening portion.

In the reagent container, the movement control member comprises:
a fixing portion that is fixed to the opening portion; and
a supporting portion that supports an upper part of the bag-shaped reagent storage at a position away from the opening portion.

In the reagent container, the opening portion is formed in a mounting member arranged on an upper part of the bag-shaped reagent storage, wherein
the mounting member comprises a supported portion that is arranged with spaced-apart horizontally from the opening portion,
the fixing portion is fixed to the opening portion, and
the supporting portion is fixed to the supported portion.

In the analyzer, the mounting member comprises a resin material formed separately from the bag-shaped reagent storage, and
an outer circumference part of the mounting member is welded to an inner circumference part of the bag-shaped reagent storage.

In the reagent container, the movement control member comprises:
a fixing portion that is fixed to the opening portion; and
a bottom supporting member that supports a bottom part of the bag-shaped reagent storage.

In the reagent container, the movement control member comprises a guiding portion that extends along a first direction in the horizontal plane and guides the movement of the opening in case that the opening is positioned below the aspiration tube of the analyzer.

In the reagent container, the movement control member is fixed to the opening portion between one end and a center of the movement control member in the first direction.

In the reagent container, the movement control member comprises a holder to hold the movement control member at the other end of the movement control member in the first direction.

In the reagent container, the holder has a flat plate shape extending along a horizontal direction or vertical direction.

In the reagent container, the frame comprises an information storage medium in which information on the reagent is stored.

In the reagent container, the opening portion comprises a sealing surface that contacts a seal positioned on the aspiration tube to seal the opening.

In the reagent container, the sealing surface is one of a top surface of the opening portion, an inner surface of the opening portion, and an outer surface of the opening portion.

In the reagent container, the frame comprises a sealing portion that covers the opening and is elastically deformable, wherein
the sealing portion deforms upon insertion of the aspiration tube to seal a gap between the aspiration tube and the opening.

In the reagent container, the opening portion comprises an aspiration tube guiding portion that protrudes downwardly from a lower end of the opening towards the interior of the bag-shaped reagent storage.

In the reagent container, the frame maintains the interior of the bag-shaped reagent storage sealed while the reagent is repeatedly aspirated by the aspiration tube.

In the reagent container, the bag-shaped reagent storage comprises a laminated structural film material that comprises gas barrier property and light shielding property.

In the reagent container, the bag-shaped reagent storage stores between 200 mL and 500 mL of the reagent.

In the reagent container, the bag-shaped reagent storage stores between 20 mL and 100 mL of the reagent.

In the reagent container, a storage period of the reagent is from 75 days to 1 year after the aspiration tube is inserted into the opening.

In the reagent container, the reagent container stores a staining solution to stain a predetermined cell as the reagent.

A reagent container kit for assembling a reagent container for storing a reagent that is aspirated by an aspiration tube installed in an analyzer comprising:
a bag-shaped reagent storage for storing the reagent; and
a frame that comprises an opening and is attachable to the bag-shaped reagent storage, wherein
the frame seals an interior of the bag-shaped reagent storage by inserting the aspiration tube thereinto from above in conjunction with a predetermined operation to the analyzer while the frame is attached to the bag-shaped reagent storage.

A method of installing a reagent container in an analyzer with an aspiration tube comprising:
moving the reagent container comprising a bag-shaped reagent storage that stores a reagent that is aspirated by the aspiration tube and a frame with an opening into the analyzer;
positioning the opening below the aspiration tube by contacting the frame with a part of the analyzer in the analyzer; and
inserting the aspiration tube into the opening from above the reagent container by moving the aspiration tube downward while the frame is in contact with a part of the analyzer, and sealing an interior of the bag-shaped reagent storage.

A reagent container for storing a reagent that is aspirated by an aspiration tube installed in an analyzer, comprising:
a reagent storage for storing the reagent; and
a frame that comprises an opening and is arranged in the reagent storage,
wherein
the opening is sealed by a seal that moves with the aspiration tube in case that the aspiration tube is inserted from above in conjunction with a predetermined operation to the analyzer.

A reagent container for storing a reagent that is aspirated by an aspiration tube that is arranged to be movable in vertical direction in an analyzer comprising:
a reagent storage for storing the reagent;
a mounting member that is arranged in the reagent storage and comprises an opening; and
a movement control member that is attached to the mounting member, wherein
the movement control member supports the reagent storage via the mounting member while positioning the opening below the aspiration tube by contacting a part of the analyzer.

A frame attached to a bag-shaped reagent container for storing a reagent that is aspirated by an aspiration tube arranged in an analyzer comprising:
a movement control member that comprises a connecting section to connect the reagent container comprising an opening, wherein
the movement control member controls the movement of the opening, by contacting with a part of the analyzer, so that an interior of the reagent container is sealed in case that the aspiration tube is inserted into the reagent container from above in conjunction with a predetermined operation to the analyzer.

A reagent container for storing a reagent that is aspirated by an aspiration tube installed in an analyzer comprising:
a container body comprising:
a bag-shaped reagent storage for storing the reagent; and
a mounting member that comprises an opening and is arranged in the bag-shaped reagent storage, wherein
the mounting member comprises a mounting portion, to which a frame is attached that restricts movement of the opening so that an interior of the bag-shaped reagent storage is sealed by inserting an aspiration tube from above in conjunction with a predetermined operation to the analyzer.

In the reagent container, the mounting member comprises a plurality of mounting portions spaced apart from each other.

A method of assembling a reagent container for storing a reagent that is aspirated by an aspiration tube installed in an analyzer comprising:
positioning a movement control member on a mounting member of the reagent container, the mounting member comprising:
a container body comprising a bag-shaped reagent storage for storing the reagent, and a mounting member comprising an opening and arranged in the bag-shaped reagent storage; and
the movement control member that controls the movement of the opening, by contacting a part of the analyzer so that an interior of the bag-shaped reagent storage is sealed in case that the aspiration tube is inserted into the bag-shaped reagent storage from above in conjunction with a predetermined operation to the analyzer; and
connecting the mounting member and the movement control member to each other by moving the movement control member relative to the mounting member.

An analyzer comprising:
a sample aspirator to aspirate a sample;
a specimen preparing unit that comprises a reagent aspirator to aspirate a reagent from a reagent container and prepares a measurement specimen by mixing the sample and the reagent;
a detector that detects a component in the measurement specimen; and
an analyzing device that analyzes a detection signal of the detector, wherein the reagent aspirator comprises:
   a container holder for holding the reagent container that comprises a reagent storage for storing the reagent and a frame with an opening;
   an aspiration tube that is inserted into the opening from above the reagent container held in the container holder and seals an interior of the reagent storage by inserting the aspiration tube into the opening;
   an operating member that receives a predetermined operation to move the aspiration tube; and
   a movement mechanism that moves the aspiration tube into and out of the reagent container held in the container holder by moving the reagent container and the aspiration tube relative to each other in conjunction with the predetermined operation.

In the analyzer, the aspiration tube seals the interior of the reagent storage by restricting inflow air into the opening.

In the analyzer, the analyzer comprises a contacting part that contacts a movement control member on the frame of the reagent container in the container holder to control the movement of the opening.

In the analyzer, the contacting part controls horizontal movement of the opening by contacting the movement control member in a horizontal direction.

In the analyzer, the contacting part comprises an inner surface of the container holder and faces the movement control member in each of a first direction and a second direction that are mutually orthogonal in a horizontal plane.

In the analyzer, the contacting part is in contact with one of a hole formed in the movement control member, a notch formed in the movement control member, and a side surface of the movement control member.

In the analyzer, the contacting part comprises a first contacting surface that is in contact with a side surface of the movement control member in a first direction in a horizontal plane.

In the analyzer, the contacting part comprises a second contacting surface that is in contact with a side surface of the movement control member in a second direction orthogonal to the first direction in the horizontal plane.

In the analyzer, the contacting part comprises a third contacting surface that is in contact with a notch formed on a side surface of the movement control member.

In the analyzer, the contacting part controls vertical movement of the opening by contacting the movement control member in a vertical direction.

In the analyzer, the contacting part is positioned to face the movement control member in each of an upward and downward directions.

In the analyzer, the contacting part comprises an upper side contacting surface and a lower side contacting surface that are in contact with the upper side and the lower side of the movement control member.

In the analyzer, the contacting part controls the movement of the opening by contacting the movement control member fixed to the opening of the reagent container.

In the analyzer, the container holder comprises a box-shaped or tubular-shaped holder that is capable of storing a reagent container inside and comprises an inlet formed in a horizontal direction, and
at least a part of the contacting part is provided in the storage.

In the analyzer, the storage comprises:
a first insertion portion into which the reagent storage of the reagent container is inserted; and
a second insertion portion that is arranged above the first insertion portion and into which the movement control member of the reagent container is inserted, wherein
the contacting part is provided in the second insertion portion.

In the analyzer, the second insertion portion extends from an inlet of the storage to a set position directly below the aspiration tube and guides the reagent container to the set position by contacting the movement control member.

In the analyzer, the contacting part is biased that is retractable toward inside of the second insertion portion and comes into contact with the movement control member inside the second insertion portion in case that the reagent container is positioned in the set position.

In the analyzer, the container holder comprises a reader to obtain information about the reagent from an information storage medium in the reagent container in the storage.

In the analyzer, the reagent aspirator comprises:
the container holder;
the aspiration tube;
the movement mechanism, and
a plurality of reagent container holders arranged in a horizontal direction, and the readers are individually provided at an upper part of the storages of each of the plurality of reagent container holders.

In the analyzer, the aspiration tube comprises a seal that seals the opening by contacting the opening in case that the aspiration tube is inserted into the opening.

In the analyzer, the seal is positioned around the aspiration tube and seals the opening by elastically deforming upon contacting with an edge of the opening.

In the analyzer, the contacting part contacts the movement control member of the reagent container to secure the opening in case that at least the aspiration tube is inserted into the opening.

In the analyzer, the contacting part comprises one of:
an entry member that enters into a concave section formed in the movement control member of the reagent container in conjunction with movement of the aspiration tube by the movement mechanism; and
an entry member that enters into a concave section formed in the movement control member of the reagent container in conjunction with placement of the reagent container in the container holder.

In the analyzer, the movement mechanism supports the aspiration tube movably in a vertical direction and moves the aspiration tube in conjunction with the predetermined operation to enter the aspiration tube into the reagent container held in the container holder and to evacuate the aspiration tube out of the reagent container.

In the analyzer, the operating member is movable between an unloading position that permits removal of the reagent container from the container holder and an unloading prevention position that prevents removal of the reagent container from the container holder, and
the movement mechanism causes the aspiration tube that is inserted into the opening in conjunction with an operation of moving the operating member to the unloading prevention position, and causes the aspiration tube that is evacuated out of the reagent container in conjunction with an operation of moving the operating member to the unloading position.

In the analyzer, the operating member comprises a placing member on which a bottom part of the reagent container is placed, and
the movement mechanism supports the placing member movably and moves the placing member in conjunction with the predetermined operation to enter the aspiration tube into the reagent container installed on the placing member and to evacuate the aspiration tube out of the reagent container.

In the analyzer, the operating member comprises a switch that accepts the predetermined operation, and
the movement mechanism comprises a drive unit that moves the reagent container and the aspiration tube relative to each other in conjunction with the predetermined operation.

### [Description of the sign]

10, 110, 403: Reagent storage, 11: Laminated structural film material, 12: Reagent, 20: Frame, 21: Opening portion, 21a: Opening, 21b, 421, 422: Sealing surface, 21c: Aspiration tube guiding portion, 22: Mounting member, 22a: Supported portion, 23, 410: Movement control member, 23a: One end, 23b: Other end, 23c: Notch, 23d: Hole, 23e: Guiding portion, 23f: Upper surface, 23g: Lower surface, 24: Horizontal contacting surface, 24a: First surface, 24b, 24c: Second surface, 24d: Third surface, 24e: Fourth surface, 25, 401, 402a, 402b: Holder, 26, 411a: Fixing portion, 27: Supporting portion, 28: Information storage medium, 100, 200, and 400a to 400e: Reagent container, 110: Reagent storage, 203: Analyzing device, 220: Sample aspirator, 230: Specimen preparing unit, 240: Detector, 250: Reagent aspirator, 250a to c: Reagent container holder, 251: Container holder, 252: Aspiration tube, 252a, 501, 502: Seal, 253: Operating member, 254, 562: Movement mechanism, 256: Reader, 260: Storage, 261: First insertion portion, 262: Second insertion portion, 270, 280: Contacting part, 271: First contacting surface, 272: Second contacting surface, 273a: Third contacting surface, 274: Upper contacting surface, 275: Lower contacting surface, 281, 511: Entry member, 300: Analyzer, 412: Bottom supporting member, 430, 440: Sealing portion, 450: Reagent container kit, 451: Container body, 511: Entry member, 550: Placing member, 560: Switch, 561: Drive unit, A: First direction, B: Second direction, Ps: Set position, Q1: Unloading position, Q2: Unloading prevention position

## Claims

1. A reagent container for storing a reagent that is aspirated by an aspiration tube installed in an analyzer comprising:
a bag-shaped reagent storage for storing the reagent; and
a frame comprising an opening attached to the bag-shaped reagent storage, wherein
the opening seals an interior of the bag-shaped reagent storage by inserting the aspiration tube from above in conjunction with a predetermined operation to the analyzer.

2. The reagent container according to claim 1, wherein
the interior of the bag-shaped reagent storage is sealed by restricting inflow of air into the opening.

3. The reagent container according to claim 1 or 2, wherein
the frame comprises:
an opening portion that comprises the opening; and
a movement control member that controls movement of the opening by contacting a part of the analyzer.

4. The reagent container according to claim 3, wherein
the movement control member controls horizontal movement of the opening by contacting a part of the analyzer in a horizontal direction.

5. The reagent container according to claim 4, wherein
the movement control member is formed to face an inner surface of a container holder of the analyzer in each of a first direction and a second direction that are mutually orthogonal in a horizontal plane.

6. The reagent container according to claim 4 or 5, wherein
the movement control member comprises a horizontal contacting surface comprising one of:
an inner surface of a hole formed in the movement control member; an inner surface of a notch formed in the movement control member; and
a side surface of the movement control member.

7. The reagent container according to claim 6, wherein
the movement control member comprises a shape extending along a first direction in the horizontal plane, and
the horizontal contacting surface comprises a first surface comprising the side surface formed at an end of the movement control member in the first direction.

8. The reagent container according to claim 6, wherein
the movement control member comprises a shape extending along a first direction in the horizontal plane, and
the horizontal contacting surface comprises a second surface comprising the side surface extending along the first direction of the movement control member.

9. The reagent container according to claim 6, wherein
the movement control member comprises a notch formed in the side surface, and
the horizontal contacting surface comprises a third surface comprising an inner surface of the notch and contacting a part of the analyzer entering into the notch.

10. The reagent container according to claim 6, wherein
the movement control member comprises a hole formed in a top surface, and
the horizontal contacting surface comprises a fourth surface comprising an inner surface of the hole and contacting a part of the analyzer entering into an interior of the hole.

11. The reagent container according to any one of claims 3 to 10, wherein
the movement control member controls vertical movement of the opening by contacting a part of the analyzer in a vertical direction.

12. The reagent container according to claim 11, wherein
the movement control member is formed to face an inner surface of a container holder of the analyzer in each of an upward direction and downward direction.

13. The reagent container according to claim 11 or 12, wherein
the movement control member comprises a top surface and a bottom surface in vertical contact with a part of the analyzer.

14. The reagent container according to any one of claims 3 to 13, wherein
the movement control member is fixed to the opening portion so as to project horizontally from the opening portion.

15. The reagent container according to claim 14, wherein
the movement control member comprises:
a fixing portion that is fixed to the opening portion; and
a supporting portion that supports an upper part of the bag-shaped reagent storage at a position away from the opening portion.
